(19) Europäisches Patentamt
European Patent Office
Office européen des brevets

(11) Veröffentlichungsnummer: **0 031 305**
**B1**

# (12) EUROPÄISCHE PATENTSCHRIFT

(45) Veröffentlichungstag der Patentschrift: **02.10.85**

(51) Int. Cl.⁴: **C 08 F 20/40**, C 08 F 2/48, C 09 J 3/14

(21) Anmeldenummer: **80810397.2**

(22) Anmeldetag: **17.12.80**

(54) **Acrylathaltige Zusammensetzungen und deren Polymerisation.**

(30) Priorität: **22.12.79 GB 7944319**
**22.04.80 GB 8013262**

(43) Veröffentlichungstag der Anmeldung:
**01.07.81 Patentblatt 81/26**

(45) Bekanntmachung des Hinweises auf die Patenterteilung:
**02.10.85 Patentblatt 85/40**

(84) Benannte Vertragsstaaten:
**BE DE FR GB IT NL SE**

(56) Entgegenhaltungen:
**EP - A - 0 005 200**
**GB - A - 1 215 591**
**US - A - 4 120 721**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Irving, Edward, Dr., 41 Swaffham Road, Burwell Cambridge CB5 OAN (GB)**
Erfinder: **Green, George Edward, Dr., 18 Church Street, Stapleford Cambridge CB2 5DS (GB)**

**EP 0 031 305 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Vorliegende Erfindung betrifft Zusammensetzungen, die ein Polymercaptan mit mindestens zwei Mercaptangruppen (—SH) und eine Verbindung mit mindestens drei äthylenisch ungesättigten Doppelbindungen enthalten. Weiterhin betrifft sie die Polymerisation solcher Zusammensetzungen mittels aktinischer Strahlung und/oder hitzeaktivierbarer Radikalkatalysatoren sowie die Verwendung der polymerisierten Produkte als Oberflächenbeschichtungen, in Druckplatten und gedruckten Schaltungen, als Klebstoffe und in verstärkten Verbundstoffen.

In der offengelegten britischen Patentanmeldung Nr. 2 012 780 A sind Zusammensetzungen beschrieben, welche

i) eine Verbindung, die im selben Molekül sowohl mindestens eine 1,2-Epoxidgruppe als auch mindestens zwei unter Allyl-, Methallyl- und 1-Propenylgruppen ausgewählte Gruppen enthält, z.B. 2,2-Bis-(3-allyl-4-(glycidyloxy)-phenyl)-propan und Bis-(3-(1-propenyl)-4-(glycidyloxy)-phenyl)-methan, und
ii) eine Verbindung, die pro Molekül mindestens zwei an aliphatische Kohlenstoffatome gebundene Mercaptangruppen enthält, z.B. Pentaerythrit-tetrathioglykolat, umfassen.

Die Zusammensetzungen werden dadurch zur Polymerisation gebracht, daß sich die Mercaptangruppen unter dem Einfluß von aktinischer Strahlung oder Radikalkatalysatoren mit den Allyl-, Methallyl- oder 1-Propenylgruppen umsetzen.

Derartige Verbindungen, welche weiterhin

iii) ein heißhärtendes Vernetzungsmittel für Polyepoxide enthalten, sind ebenfalls beschrieben; die mehr als eine Epoxidgruppe pro Durchschnittsmolekül enthaltenden polymerisierten Produkte wären somit anschließend an Ort und Stelle vernetzbar.

Aus der offengelegten britischen Patentanmeldung Nr. 2 012 871 A sind ähnliche Zusammensetzungen bekannt, bei denen die Komponente i) statt mindestens einer Epoxidgruppe mindestens eine phenolische Hydroxylgruppe enthält, z.B. 2,2-Bis-(3-allyl-4-hydroxyphenyl)-propan und Bis-(3-(1-propenyl)-4-hydroxyphenyl)-methan, wobei die Komponente iii) dementsprechend ein hitzeaktivierbares Vernetzungsmittel für Phenol/Aldehyd-novolakharze ist. Die pro Durchschnittsmolekül mehr als eine phenolische Hydroxylgruppe enthaltenden, polymerisierten Produkte wären ebenfalls anschließend durch Erhitzen an Ort und Stelle vernetzbar.

Es wurde nun gefunden, daß gewisse, Acrylat- oder Methacrylatestergruppen enthaltende Verbindungen durch Belichtung mit Strahlung oder unter der Einwirkung von Radikalkatalysatoren in Gegenwart bestimmter Mercaptane sehr rasch zur Polymerisation gebracht werden können, wobei sich Produkte mit wertvollen Eigenschaften bilden. Die eingesetzten Acrylat- oder Methacrylatester enthalten fernerhin Allyl-, Methallyl- und/oder 1-Propenylgruppen. Obwohl die Brauchbarkeit dieser Erfindung nicht davon abhängt, ob eine solche Annahme zutrifft, wird angenommen, daß die Doppelbindungen vom Allyltyp bevorzugt mit den Mercaptangruppen reagieren und damit die über die Doppelbindungen in den Acryl- oder Methacrylgruppen verlaufenden, polymerbildenden Vorgänge erleichtern. Was auch der Reaktionsmechanismus sein mag, wurde gefunden, daß die Zusammensetzungen schnell polymerisieren, wobei sich Oberflächenbeschichtungen und Klebverbindungen bilden, die durch gute Beständigkeit gegen schädliche Umwelteinflüsse wie heiße feuchte Bedingungen ausgezeichnet sind.

Ein Gegenstand dieser Erfindung sind dementsprechend polymerisierbare Zusammensetzungen, gekennzeichnet durch

a) eine Verbindung, die im Molekül sowohl
   i) mindestens eine unter Acryloyloxy- und Methacryloyloxygruppen ausgewählte Gruppe als auch
   ii) mindestens eine unter Allyl-, Methallyl- und 1-Propenylgruppen ausgewählte Gruppe enthält, die jeweils direkt an ein zu einem aromatischen Kern gehöriges Kohlenstoffatom gebunden sind oder an ein Sauerstoffatom oder eine Oxycarbonylgruppe (—OOC—), die ihrerseits direkt an ein solches Kohlenstoffatom gebunden sind, wobei die Summe dieser Gruppen i) und ii) mindestens drei beträgt, und
b) eine Verbindung, die pro Molekül mindestens zwei direkt an aliphatische Kohlenstoffatome gebundene Mercaptangruppen in einem solchen Verhältnis enthält, daß mindestens 0,8 einer solchen Mercaptangruppe auf eine unter Allyl-, Methallyl- und 1-Propenylgruppen ausgewählte Gruppe in a), jedoch weniger als 1,0 einer solchen Mercaptangruppe auf eine unter Acryloyl-, Methacryloyl-, Allyl-, Methallyl- und 1-Propenylgruppen ausgewählte Gruppe in a) kommt.

Weitere Gegenstände dieser Erfindung sind ein Verfahren zur Polymerisation solcher Zusammensetzungen, welches darin besteht, daß man sie aktinischer Strahlung oder der Wirkung eines

Radikalkatalysators aussetzt, sowie die durch ein solches Verfahren erhaltenen polymerisierten Produkte.

Die U.S.-Patentschrift Nr. 4 120 721 beschreibt strahlungshärtbare Zusammensetzungen zur Verwendung in Beschichtungs- und Bebilderungsverfahren. Die Zusammensetzungen umfassen ein mehrfach ungesättigtes Urethan mit Acryl- oder Methacrylendgruppen, ein Vinylmonomer, welches vorzugsweise ein Ester der Acryl- oder Methacrylsäure ist, ein Polymercaptan mit mindestens zwei —SH-Gruppen pro Molekül und einen Photoinitiator. Um das Polyurethan mit Acryl- oder Methacrylendgruppen zu erhalten, läßt man ein Diisocyanat mit einem hydroxyl-substituierten Acrylat oder Methacrylat in einer solchen Menge reagieren, daß ein stöchiometrisches Äquivalent freier Isocyanatgruppen im Reaktionsprodukt verbleibt, und dann diese Isocyanatgruppen mit dem stöchiometrischen Äquivalent Hydroxylgruppen in einem mehrwertigen Alkohol, vorzugsweise einem Polyäthylenglykol oder Polypropylenglykol, reagieren läßt. Neben den ungefähr fünfzig als geeignet angeführten Hydroxyalkylacrylaten und -methacrylaten sind 2-Hydroxy-3-(allyloxy)-propylacrylat, 2-Hydroxy-3-cinnamylpropylacrylat, 2-Hydroxy-3-(crotonyloxy)-propylacrylat sowie die entsprechenden Methacrylate erwähnt. Die speziell beschriebenen Polymeren wurden aus einem Hydroxyalkylacrylat oder Hydroxyalkylmethacrylat hergestellt und enthielten keine Doppelbindungen vom Allyltyp. Dadurch wird in keiner Weise nahegelegt, daß die Verwendung von Urethanen, die sich von Hydroxyalkylacrylaten mit zusätzlichen äthylenischen Doppelbindungen ableiten, mit Acryl- oder Methacrylendgruppen irgendeinen Vorteil erbringen würde.

In den erfindungsgemäßen Zusammensetzungen enthält die Komponente a) vorzugsweise keine äthylenischen Doppelbindungen außer denen in Acryloyloxy-, Methacryloyloxy-, Allyl-, Methallyl- und 1-Propenylgruppen. Vorzugsweise besitzt die Komponente a) ein Molekulargewicht von höchstens 5000. Bevorzugt ist bzw. sind die bzw. jede Acryloyloxy- oder Methacryloyloxygruppe(n) direkt oder über das (endständige) Äthersauerstoffatom einer Gruppe der Formel

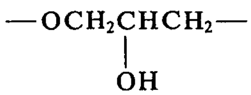 (I)

oder

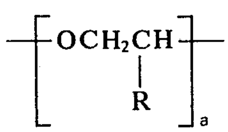 (II)

worin R ein Wasserstoffatom oder eine Methylgruppe bedeutet und a eine ganze Zahl von 1 bis 6 ist, an ein Kohlenstoffatom eines aromatischen Kerns gebunden.

Vorzugsweise enthält die Komponente a) pro Molekül mindestens zwei und höchstens sechs unter Acryloyloxy- und Methacryloyloxygruppen ausgewählte Gruppen und mindestens zwei und höchstens fünfzehn unter Allyl-, Methallyl- und 1-Propenylgruppen ausgewählte Gruppen.

Als Komponente (a) werden weiterhin noch solche Verbindungen bevorzugt, in denen die Summe der unter Acryloyloxy- und Methacryloyloxygruppen ausgewählten Gruppen pro Molekül der Summe der unter Allyl-, Methallyl- und 1-Propenylgruppen ausgewählten Gruppen in diesem Molekül gleich ist.

Der bzw. die aromatische(n) Kern(e) in der Komponente a) ist bzw. sind vorzugsweise ein Benzolkern oder Naphthalinkern.

Weitere bevorzugte Komponenten a) sind mehrwertige Phenole, in denen mindestens zwei phenolische Hydroxylgruppen entweder direkt oder über das (endständige) Äthersauerstoffatom einer Gruppe der Formel I oder II mit Acryloyl- oder Methacryloylgruppen verestert sind und in denen mindestens zwei phenolische Hydroxylgruppen direkt mit unter Allyl-, Methallyl- und 1-Propenylgruppen ausgewählten Gruppen veräthert sind.

Besonders bevorzugt als Komponente a) werden mehrwertige Phenole, in denen mindestens zwei phenolische Hydroxylgruppen entweder direkt oder über das (endständige) Äthersauerstoffatom einer Gruppe der oben erwähnten Formel I oder II mit unter Acryloyl- und Methacryloylgruppen ausgewählten Gruppen verestert sind und wobei das mehrwertige Phenol direkt an Kohlenstoffatomen im bzw. in den Benzol- oder Naphthalinkern(en) mit mindestens zwei unter Allyl-, Methallyl- und 1-Propenylgruppen ausgewählten Gruppen substituiert ist, insbesondere solche Verbindungen, wo sich diese Gruppen in ortho-Stellung zu den genannten Acryloyl- oder Methacryloylgruppen befinden.

Beispiele für als Komponente a) geeignete Verbindungen sind solche der folgenden Formeln:

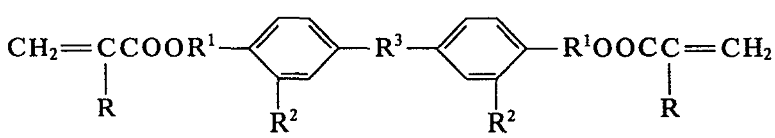 (III)

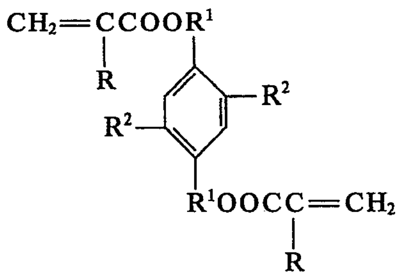

(IV)

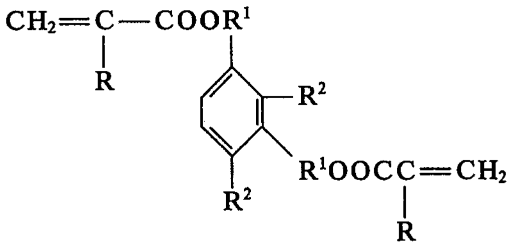

(V)

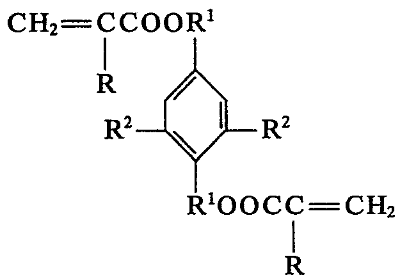

(VI)

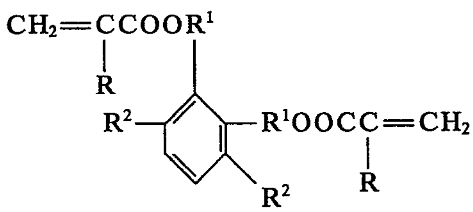

(VII)

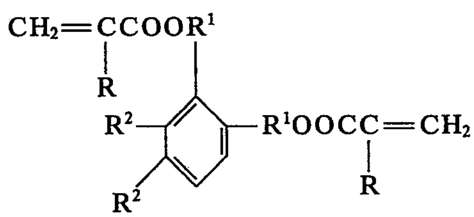

(VIII)

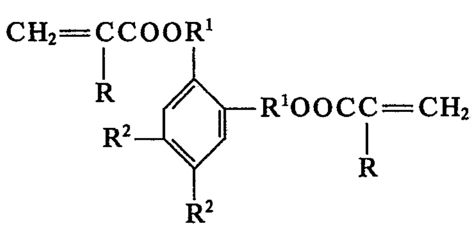

(IX)

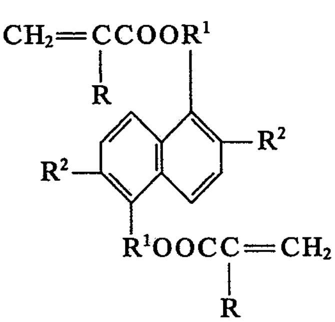

(X)

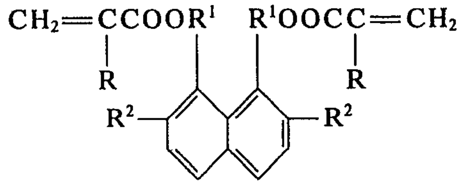

(XI)

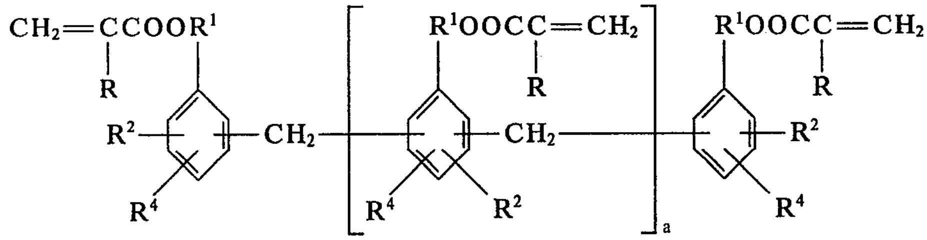

(XII)

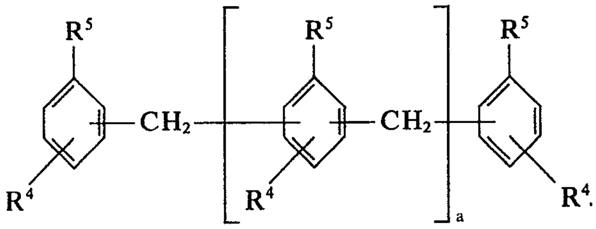

(XIII)

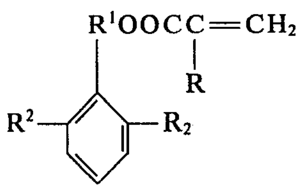

(XIV)

und

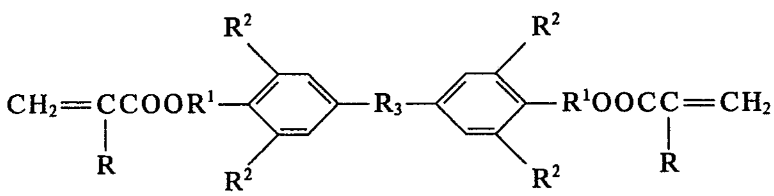

(XV)

worin R und a die unter der Formel II bezeichneten Bedeutungen haben, die $R^1$ jeweils eine Sauerstoff-Kohlenstoffbindung oder eine Gruppe der oben definierten Formel I oder II bedeuten, die $R^2$ jeweils eine Allyl-, Methallyl- oder 1-Propenylgruppe darstellen, $R^3$ für eine Kohlenstoff-Kohlenstoffbindung, eine Alkylen- oder Alkylidengruppe mit bis zu 5 Kohlenstoffatomen, ein Äthersauerstoffatom, ein Schwefelatom oder eine Gruppe der Formel —CO—, —SS—, —SO— oder —$SO_2$— steht, die $R^4$ jeweils ein Wasserstoff-, Chlor- oder Bromatom oder eine Alkylgruppe mit 1 bis 4 Kohlenstoffatomen bedeuten und die $R^5$ jeweils eine Gruppe der Formel $CH_2$=C(R)COOR$^1$— oder eine Allyloxy-, Methallyloxy- oder 1-Popenyloxygruppe darstellen, wobei mindestens ein $R^5$ eine solche Gruppe der Formel $CH_2$= C(R)COOR$^1$— und mindestens zwei $R^5$ je eine Allyloxy-, Methallyloxy- oder 1-Propenyloxygruppe sind, mit der Maßgabe, daß sich jede in den Formeln XII und XIII gezeigte —$CH_2$— und $R^2$-Gruppe in ortho- oder para-Stellung zu einer abgebildeten Gruppe $CH_2$=C(R)COOR$^1$— und $R^5$— befindet.

Spezielle Beispiele für als Komponente a) geeignete Verbindungen sind:

2,2-Bis-(3-allyl-4-(methacryloyloxy)-phenyl)-propan,
Bis-(3-allyl-4-(methacryloyloxy)-phenyl)-methan,
2,2-Bis-(3-methallyl-4-(methacryloyloxy)-phenyl)-propan,
Bis-(3-methallyl-4-(methacryloyloxy)-phenyl)-methan,
2,2-Bis-(3-(1-propenyl)-4-(methacryloyloxy)-phenyl)-propan,
Bis-(3-(1-propenyl)-4-(methacryloyloxy)-phenyl)-methan
und deren Acryloylanaloge;
2,2-Bis-(3-allyl-4-(3-(methacryloyloxy)-2-hydroxypropoxy)-phenyl)-propan,
Bis-(3-allyl-4-(3-(methacryloyloxy)-2-hydroxypropoxy)-phenyl)-methan,
2,2-Bis-(3-methallyl-4-(3-(methacryloyloxy)-2-hydroxypropoxy)-phenyl)-propan,

Bis-(3-methallyl-4-(3-(methacryloyloxy)-2-hydroxypropoxy)-phenyl)-methan,
2,2-Bis-(3-(1-propenyl)-4-(3-(methacryloyloxy)-2-hydroxypropoxy)-phenyl)-propan,
Bis-(3-(1-propenyl)-4-(3-(methacryloyloxy)-2-hydroxypropoxy)-phenyl)-methan
und deren Acryloylanaloge;
2,2-Bis-(3-allyl-4-(2-(methacryloyloxy)-äthoxy)-phenyl)-propan,
Bis-(3-allyl-4-(2-(methacryloyloxy)-äthoxy)-phenyl)-methan,
2,2-Bis-(3-methallyl-4-(2-(methacryloyloxy)-äthoxy)-phenyl)-propan,
Bis-(3-methallyl-4-(2-(methacryloyloxy)-äthoxy)-phenyl)-methan,
2,2-Bis-(3-(1-propenyl)-4-(2-(methacryloyloxy)-äthoxy)-phenyl)-propan,
Bis-(3-(1-propenyl)-4-(2-(methacryloyloxy)-äthoxy)-phenyl)-methan
und deren Acryloylanaloge;
2,2-Bis-(3-allyl-4-(2-(methacryloyloxy)-2-methyläthoxy)-phenyl)-propan,
Bis-(3-allyl-4-(2-(methacryloyloxy)-2-methyläthoxy)-phenyl)-methan,
2,2-Bis-(3-methallyl-4-(2-(methacryloyloxy)-2-methyläthoxy)-phenyl)-propan,
Bis-(3-methallyl-4-(2-(methacryloyloxy)-2-methyläthoxy)-phenyl)-methan,
2,2-Bis-(3-(1-propenyl)-4-(2-(methacryloyloxy)-2-methyläthoxy)-phenyl)-propan,
Bis-(3-(1-propenyl)-4-(2-(methacryloyloxy)-2-methyläthoxy)-phenyl)-methan
und deren Acryloylanaloge;
2,6-Diallylphenylacrylat, 2,6-Diallylphenylmethacrylat,
2,6-Dimethallylphenylacrylat, 2,6-Dimethallylphenylmethacrylat,
2,6-Di-(1-propenyl)-phenylacrylat und 2,6-Di-(1-propenyl)-phenylmethacrylat;
1,3-Diallyl-2-(2-hydroxy-3-(methacryloyloxy)-propoxy)-benzol,
1,3-Dimethallyl-2-(2-hydroxy-3-(methacryloyloxy)-propoxy)-benzol,
1,3-Di-(1-propenyl)-2-(2-hydroxy-3-(methacryloyloxy)-propoxy)-benzol
und deren Acryloylanaloge;
1,3-Diallyl-2-(2-(methacryloyloxy)-äthoxy)-benzol,
1,3-Dimethallyl-2-(2-(methacryloyloxy)-äthoxy)-benzol,
1,3-Di-(1-Propenyl)-2-(2-(methacryloyloxy)-äthoxy)-benzol
und deren Acryloylanaloge;
1,3-Diallyl-2-(2-(methacryloyloxy)-2-methyläthoxy)-benzol,
1,3-Dimethallyl-2-(2-(methacryloyloxy)-2-methyläthoxy)-benzol,
1,3-Di-(1-propenyl)-2-(2-(methacryloyloxy)-2-methyläthoxy)-benzol
und deren Acryloylanaloge;
2,2-Bis-(3,5-diallyl-4-(methacryloyloxy)-phenyl)-propan,
Bis-(3,5-diallyl-4-(methacryloyloxy)-phenyl)-methan,
2,2-Bis-(3,5-dimethallyl-4-(methacryloyloxy)-phenyl)-propan,
Bis-(3,5-dimethallyl-4-(methacryloyloxy)-phenyl)-methan,
2,2-Bis-(3,5-di-(1-propenyl)-4-(methacryloyloxy)-phenyl)-propan,
Bis-(3,5-di-(1-propenyl)-4-(methacryloyloxy)-phenyl)-methan
und deren Acryloylanaloge;
2,2-Bis-(3,5-diallyl-4-(3-(methacryloyloxy)-2-hydroxypropoxy)-phenyl)-propan,
Bis-(3,5-diallyl-4-(3-(methacryloyloxy)-2-hydroxypropoxy)-phenyl)-methan,
2,2-Bis-(3,5-dimethallyl-4-(3-(methacryloyloxy)-2-hydroxypropoxy)-phenyl)-propan,
Bis-(3,5-dimethallyl-4-(3-(methacryloyloxy)-2-hydroxypropoxy)-phenyl)-methan,
2,2-Bis-(3,5-di-(1-propenyl)-4-(3-(methacryloyloxy)-2-hydroxypropoxy)-phenyl)-propan und
Bis-(3,5-di-(1-propenyl)-4-(3-(methacryloyloxy)-2-hydroxypropoxy)-phenyl)-methan
und deren Acryloylanaloge.

Weitere als Komponente a) in Betracht kommende Verbindungen enthalten zwei Acryloyloxy- oder Methacryloyloxygruppen und nur eine Allyl-, Methallyl- oder 1-Propenylgruppe pro Molekül. Die letztere Gruppe kann an eine Oxycarbonylgruppe gebunden sein, welche ihrerseits direkt an ein zu einem aromatischen Kern gehöriges Kohlenstoffatom gebunden ist, wie in solchen der Formel

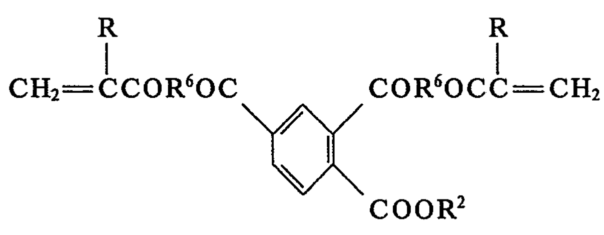

(XVI)

oder

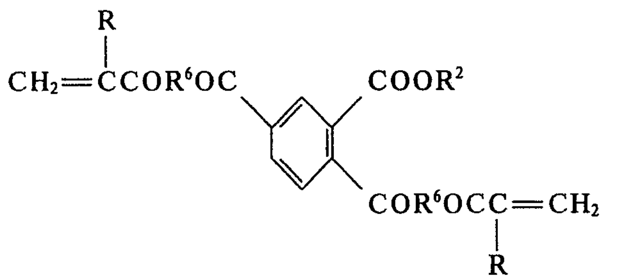

(XVII)

worin die $R^6$ jeweils eine Gruppe der Formel I oder II bedeutet.

Spezielle Beispiele für Verbindungen der Formel XVI oder XVII sind:

1-(Allyloxycarbonyl)-2,4-bis-(3-(methacryloyloxy)-2-hydroxypropoxycarbonyl)-benzol,
1-(Allyloxycarbonyl)-2,5-bis-(3-(methacryloyloxy)-2-hydroxypropoxycarbonyl)-benzol,
1-(Allyloxycarbonyl)-2,4-bis-(methacryloyloxycarbonyl)-benzol,
1-(Allyloxycarbonyl)-2,5-bis-(methacryloyloxycarbonyl)-benzol,
1-(Methallyloxycarbonyl)-2,4-bis-(3-(methacryloyloxy)-2-hydroxypropoxycarbonyl)-benzol,
1-(Methallyloxycarbonyl)-2,5-bis-(3-(methacryloyloxy)-2-hydroxypropoxycarbonyl)-benzol,
1-(Methallyloxycarbonyl)-2,4-bis-(methacryloyloxycarbonyl)-benzol,
1-(Methallyloxycarbonyl)-2,5-bis-(methacryloyloxycarbonyl)-benzol,
1-(1-Propenyloxycarbonyl)-2,4-bis-(3-(methacryloyloxy)-2-hydroxypropoxycarbonyl)-benzol,
1-(1-Propenyloxycarbonyl)-2,5-bis-(3-(methacryloyloxy)-2-hydroxypropoxycarbonyl)-benzol,
1-(1-Propenyloxycarbonyl)-2,4-bis-(methacryloyloxycarbonyl)-benzol,
1-(1-Propenyloxycarbonyl)-2,5-bis-(methacryloyloxycarbonyl)-benzol
und die entsprechenden Acryloyloxyverbindungen

Weitere Verbindungen, die zwei Acryloyloxy- oder Methacryloyloxygruppen und nur eine Allyl-, Methallyl- oder 1-Propenylgruppe pro Molekül enthalten, sind solche der Formel

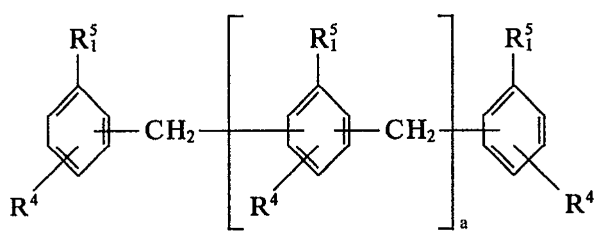

(XVIII)

worin die $R_1^5$ jeweils $CH_2{=}C(R)COOR^1-$ oder Allyloxy, Methallyloxy oder 1-Propenyloxy darstellen, wobei mindestens zwei $R_1^5$ eine solche Gruppe der Formel $CH_2{=}C(R)COOR^1-$ und ein $R_1^5$ eine Allyloxy-, Methallyloxy- oder 1-Propenyloxygruppe bedeuten und wobei sich die $-CH_2$-Gruppen in ortho- oder para-Stellung zu einer Gruppe $-R_1^5$ befinden, R und a die unter der Formel I, $R^1$ die unter den Formeln III bis XII, XIV und XV sowie $R^4$ die unter den Formeln XII und XIII angegebenen Bedeutungen haben.

Ferner kommen als Komponente a) Produkte in Frage, welche sechs oder mehr, z.B. zwölf, Allyl-, Methallyl- oder 1-Propenylgruppen pro Molekül enthalten und welche durch Verfahren erhältlich sind, bei denen eine Vorverlängerung stattfindet. Zum Beispiel kann man einen Diglycidyläther eines im bzw. in den aromatischen Kern(en) durch eine oder mehrere Allyl-, Methallyl- oder 1-Propenylgruppen substituierten zweiwertigen Phenols mit einem zweiwertigen Phenol, einem zweiwertigen Alkohol, einer Dicarbonsäure oder einem Hydantoin mit zwei freien —NH-Gruppen im bzw. in den Hydantoinring(en) vorverlängern. Das vorverlängerte Produkt läßt man dann an den so gebildeten sekundären Hydroxylgruppen mit Glycidylacrylat oder Glycidylmethacrylat bzw. mit Acryloylchlorid oder Methacryloylchlorid reagieren.

Weitere vorverlängerte, sechs oder mehr Allyl-, Methallyl- oder 1-Propenylgruppen enthaltende Produkte sind durch Vorverlängerung von Diglycidyläthern zweiwertiger Phenole, Diglycidyläthern zweiwertiger Alkohole oder Di-(N-glycidyl)-hydantoinen wie 1,3-Diglycidylhydantoin und 3,3'-Diglycidyl-1,1'-methylen-bis-(hydantoin) mit einem im bzw. in den aromatischen Kern(en) durch eine oder mehrere Allyl-, Methallyl- oder 1-Propenylgruppen substituierten zweiwertigen Phenol und nachfolgende Umsetzung an den so erzeugten sekundären Hydroxylgruppen mit Glycidylacrylat, Glycidylmethacrylat, Acryloylchlorid oder Methacryloylchlorid erhältlich.

Als Komponente a) kommen auch Benzophenonderivate der Formel

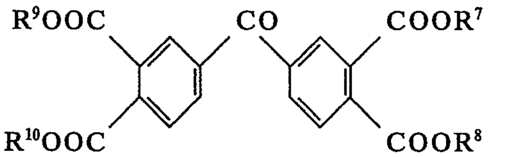

(XIX)

in Betracht, worin eins von $R^7$ und $R^8$ und eins von $R^9$ und $R^{10}$ dieselbe Bedeutung haben und je eine Allyl- oder Methallylgruppe darstellen und die verbleibenden Symbole $R^7$ und $R^8$ bzw. $R^9$ und $R^{10}$ jeweils den Rest eines Alkohols nach Wegnahme einer alkoholischen Hydroxylgruppe darstellen, wobei dieser Rest eine Acryloyloxy- oder Methacryloyloxygruppe, insbesondere eine Acryloyloxyalkylenoxy-, Methacryloyloxyalkylenoxy-, Acryloyloxyhydroxyalkylenoxy- oder Methacryloyloxyhydroxyalkylenoxygruppe, enthält.

Vorzugsweise stehen die verbleibenden Symbole $R^7$ und $R^8$ bzw. $R^9$ und $R^{10}$ jeweils für eine Gruppe der Formel

$$CH_2{=}\underset{\displaystyle R}{\underset{|}{C}}COR^6{-} \qquad (XX)$$

worin R die unter der Formel II und $R^6$ die unter den Formeln XVI und XVII angegebenen Bedeutungen haben.

Die meisten vorbekannten Substanzen, die bei Belichtung mit aktinischer Strahlung polymerisieren, werden mit einem Photoinitiator wie Benzoin und dessen Alkyläthern eingesetzt, um die zur Polymerisation erforderliche Belichtungszeit zu verkürzen. Manchmal ist jedoch die Anwendung eines Initiators unzweckmäßig, denn er kann die elektrischen Eigenschaften des Polymeren verändern oder sich beim Erhitzen verflüchtigen, wodurch er zur Verwendung in mehrschichtigen gedruckten Schaltungen ungeeignet wird; bei deren Herstellung muß man daher das Polymer nach dem Ablauf des Metallätzverfahrens entfernen, was den Preis der Schichtkörper erhöht und die Metalloberfläche beschädigen kann.

Wohlbekannterweise kann man photopolymerisierbare Substanzen herstellen, die einen Rest gewisser olefinisch ungesättigter Monocarbonsäuren, insbesondere Acryloyloxy-, Methacryloyloxy-, Sorboyloxy-, Cinnamoyloxy- oder 3-(2-Furyl)-acryloyloxygruppen enthalten und die im allgemeinen zusammen mit einem wie oben angegebenen Photoinitiator eingesetzt werden. Aus der britischen Patentschrift Nr. 1 464 287 ist bekannt, daß man den Zusatz eines Photoinitiators durch Einbau von Chalkongruppen oder chalkonartigen Gruppen in das Molekül einer Verbindung mit einem Rest einer olefinisch ungesättigten Monocarbonsäure vermeiden kann.

In jüngster Zeit wurden photopolymerisierbare photosensibilisierende Verbindungen beschrieben (offengelegte britische Patentanmeldung 2 015 518 A), die durch Anlagerung eines Alkylenoxyds an die phenolische(n) Hydroxylgruppe bzw. -gruppen eines hydroxylsubstituierten Benzophenons und nachfolgende Veresterung mit einer ungesättigten Carbonsäure wie Acrylsäure oder Umsetzung mit Glycidylacrylat hergestellt werden. Weitere solche Verbindungen wurden (siehe DE-OS 2 800 356) durch Umsetzung einer mehr als eine 1,2-Epoxidgruppe enthaltenden Verbindung mit einem stöchiometrischen Unterschuß von Ammoniak und/oder einem aliphatischen oder cycloaliphatischen primären und/oder sekundären Amin, dann mit einem carboxylsubstituierten Benzophenon und zuletzt mit Acrylsäure oder Methacrylsäure hergestellt.

Ebenfalls ist bekannt, daß olefinisch ungesättigte Verbindungen, beispielsweise solche, die Allylgruppen enthalten, an den Äthylendoppelbindungen eine Anlagerungsreaktion mit Polymercaptanen eingehen, die sich durch aktinische Strahlung auslösen läßt (siehe z. B. britische Patentschriften Nr. 1 215 591, 1 251 232 und 1 445 814 sowie offengelegte britische Patentanmeldungen Nr. 2 012 780 A und 2 012 781 A). Üblicherweise ist es erforderlich, bei solchen Gemischen aus Polymercaptanen und olefinisch ungesättigten Verbindungen einen Photoinitiator einzusetzen.

Es wurde nun gefunden, daß die Anwendung eines zusätzlichen Photoinitiators durch den Einsatz von Verbindungen der Formel XIX als Komponente a) entfällt.

Spezielle Beispiele für Verbindungen der Formel XIX sind Benzophenon-3,4,3',4'-tetracarbonsäure-X,X'-diallylester-Y,Y'-bis-(3-methacryloyloxy)-2-hydroxypropyl)-ester. (Der Gebrauch der Bezeichnungen X, X', Y und Y' wird weiter unten erklärt.)

Es ist anzunehmen, daß die als Komponente a) in den erfindungsgemäßen Zusammensetzungen verwendeten Verbindungen neu sind.

Verbindungen der Formeln III bis XI, worin die $R^1$ je eine Sauerstoff-Kohlenstoffbindung und die $R^2$ je Allyl oder Methallyl bedeuten, lassen sich dadurch erhalten, daß man die entsprechenden zweiwertigen Phenole in ihre Diallyl- bzw. Dimethallyläther überführt, anschließend eine Claisen-Umlagerung zum Diallylphenol bzw. Dimethallylphenol durchführt und dann die freigesetzten phenolischen Hydroxylgruppen direkt mit Acryloyl- oder Methacryloylchlorid verestert.

Verbindungen der Formeln III bis XI, worin die $R^1$ je eine Gruppe der Formel I und die $R^2$ je Allyl oder Methallyl bedeuten, lassen sich dadurch erhalten, daß man die obenerwähnten Diallylphenole bzw. Dimethallylphenole in ihre Glycidyläther überführt und deren Epoxidgruppen durch Umsetzung mit Acryl- oder Methacrylsäure öffnet. Ferner sind sie auch durch eine entsprechende Umsetzung der obenerwähnten Diallylphenole bzw. Dimethallylphenole mit Glycidylacrylat oder Glycidylmethacrylat erhältlich.

Verbindungen der Formeln III bis XI, worin die $R^1$ je eine Gruppe der Formel II und die $R^2$ je Allyl oder Methallyl bedeuten, lassen sich dadurch erhalten, daß man die obengenannten Diallylphenole bzw. Dimethallylphenole mit 1 bis 6 Mol Äthylenoxyd oder Propylenoxyd pro phenolische Hydroxylgruppe veräthert und anschließend mit Acryloylchlorid oder Methacryloylchlorid verestert.

Verbindungen der Formel XII, worin die $R^1$ je eine Sauerstoff-Kohlenstoffverbindung und die $R^2$ je Allyl oder Methallyl bedeuten, lassen sich dadurch erhalten, daß man einen entsprechenden Phenol/ Formaldehydnovolak in seinen Tri- oder höheren Allyl- bzw. Methallyläther überführt, diesen zur Bildung des allyl- oder methallylsubstituierten Novolaks einer Claisen-Umlagerung unterwirft und dann die freigesetzten phenolischen Hydroxylgruppen mit Acryloylchlorid oder Methacryloylchlorid verestert.

Verbindungen der Formel XII, worin die $R^1$ je eine Gruppe der Formel I und die $R^2$ je Allyl oder Methallyl bedeuten, lassen sich dadurch erhalten, daß man die obenerwähnten allyl- bzw. methallylsubstituierten Novolake in ihre Glycidyläther überführt und deren Epoxidgruppen durch Umsetzung mit Acryl- oder Methacrylsäure öffnet. Ferner sind sie auch durch Umsetzung der oben erwähnten allyl- oder methallylsubstituierten Novolake mit Glycidylacrylat oder Glycidylmethacrylat erhältlich.

Verbindungen der Formel XII, worin die $R^1$ je eine Gruppe der Formel II und die $R^2$ je Allyl oder Methallyl bedeuten, lassen sich dadurch erhalten, daß man die obenerwähnten allyl- oder methallylsubstituierten Novolake mit 1 bis 6 Mol Äthylenoxyd oder Propylenoxyd pro phenolische Hydroxylgruppe veräthert und anschließend mit Acryloylchlorid oder Methacryloylchlorid verestert.

Verbindungen der Formel XIII, worin die $R^1$ in der bzw. den Gruppe(n) $CH_2{=}C(R)COOR^1-$ je eine Sauerstoff-Kohlenstoffverbindung und mindestens zwei Gruppen $R^5$ je Allyloxy oder Methallyloxy bedeuten, lassen sich dadurch erhalten, daß man in beliebiger Reihenfolge die phenolischen Hydroxylgruppen in einem Phenol/Formaldehydnovolak mit Allyl- bzw. Methallylgruppen teilweise veräthert und die phenolischen Hydroxylgruppen darin mit Acryloylchlorid oder Methacryloylchlorid teilweise verestert.

Verbindungen der Formel XIII, worin die $R^1$ in der bzw. den Gruppe(n) $CH_2{=}C(R)COOR^1-$ je eine Gruppe der Formel I und mindestens zwei Gruppen $R^5$ je Allyloxy oder Methallyloxy bedeuten, lassen sich dadurch erhalten, daß man in beliebiger Reihenfolge phenolische Hydroxylgruppen in einem Phenol/Formaldehydnovolak in Glycidylgruppen überführt und diese mit Acryl- oder Methacrylsäure umsetzt sowie mindestens zwei phenolische Hydroxylgruppen mit Allylchlorid oder Methallylchlorid veräthert. Ferner kann man auch mindestens eine phenolische Hydroxylgruppe vor oder nach der Überführung von mindestens zwei der phenolischen Hydroxylgruppen mittels Allylchlorid bzw. Methallylchlorid in Allyl- bzw. Methallylgruppen mit Glycidylacrylat oder Glycidylmethacrylat zur Reaktion bringen.

Verbindungen der Formel XIII, worin die $R^1$ in der bzw. den Gruppe(n) $CH_2{=}C(R)COOR^1-$ je eine Gruppe der Formel II und mindestens zwei Gruppen $R^5$ je Allyloxy oder Methallyloxy bedeuten, lassen sich dadurch erhalten, daß man mindestens zwei phenolische Hydroxylgruppen mit Allylchlorid oder Methallylchlorid veräthert, eine oder mehrere verbleibende phenolische Hydroxylgruppen mit Äthylenoxyd oder Propylenoxyd umsetzt und mit Acryloylchlorid oder Methacryloylchlorid verestert.

Verbindungen der Formel XVI sind auf analoge Weise wie die der Formel XIII erhältlich.

Verbindungen der Formeln XIV und XV, worin $R^1$ bzw. beide $R^1$ eine Sauerstoff-Kohlenstoffbindung und die $R^2$ je Allyl oder Methallyl bedeuten, lassen sich dadurch erhalten, daß man die phenolische Hydroxylgruppe in Phenol selbst oder die beiden phenolischen Hydroxylgruppen im entsprechenden zweiwertigen Phenol mit einer Allyl- oder Methallylgruppe bzw. -gruppen veräthert, dann eine Claisen-Umlagerung durchführt, die so freigesetzt(n) phenolische(n) Hydroxylgruppe bzw. -gruppen erneut mit einer Allyl- oder Methallylgruppe bzw. -gruppen veräthert, eine weitere Claisen-Umlagerung durchführt, welche das Diallyl- oder Dimethallylphenol bzw. das Tetraallyl- oder Tetramethallylbisphenol liefert, und die phenolische(n) Hydroxylgruppe oder -gruppen mit Acryloyl- oder Methacryloylchlorid verestert.

Verbindungen der Formeln XIV und XV, worin $R^1$ bzw. beide $R^1$ eine Gruppe der Formel I und die $R^2$ je Allyl oder Methallyl bedeuten, lassen sich dadurch erhalten, daß man die phenolische Hydroxylgruppe im Diallyl- oder Dimethallylphenol bzw. beide phenolische Hydroxylgruppen im Tetraallyl- oder Tetramethallylbisphenol in eine Glycidyläthergruppe bzw. -gruppen überführt und anschließend mit Acryl- oder Methacrylsäure umsetzt. Ferner kann man auch das Diallyl- oder Dimethallylphenol bzw. das Tetraallyl- oder Tetramethallylbisphenol entsprechend mit einem bzw. zwei Mol Glycidylacrylat oder Glycidylmethacrylat zur Raktion bringen.

Verbindungen der Formeln XIV und XV, worin $R^1$ bzw. beide $R^1$ eine Gruppe der Formel II und die $R^2$ je Allyl oder Methallyl bedeuten, lassen sich dadurch erhalten, daß man die phenolische(n) Hydroxylgruppe bzw. -gruppen im obenerwähnten Diallyl- oder Dimethallylphenol bzw. Tetraallyl- oder

Tetramethallylbisphenol mit 1 bis 6 Mol Äthylenoxyd oder Propylenoxyd pro phenolische Hydroxylgruppe veräthert und anschließend mit Acryloylchlorid oder Methacryloylchlorid verestert.

Verbindungen der Formeln III bis XV, worin die $R^2$ je eine 1-Propenylgruppe bedeuten, können dadurch hergestellt werden, daß man deren Allylanaloge durch Erhitzen mit Alkali isomerisiert.

Die Bildung von Allyl- und Methallyläthern einwertiger und mehrwertiger Phenole und deren Claisen-Umlagerung ist in den offengelegten britischen Patentanmeldungen Nr. 2 012 780 A und 2 012 781 A beschrieben, einschließlich der Herstellung von 2,6-Diallylphenolen, 2,6-Dimethallylphenolen, 2,2',6,6'-Tetraallylbisphenolen und 2,2',6,6'-Tetramethallylbisphenolen sowie der Überführung der Allylphenole in ihre Glycidyläther. Die Isomerisierung von Arylallyläthern in Aryl-1-propenyläther ist ebenfalls in diesen Anmeldungen beschrieben.

Methoden zur Umsetzung von Phenolen mit Äthylenoxyd oder Propylenoxyd zu den entsprechenden Phenoxyalkanolen sind wohlbekannt, wie auch die Veresterung von Phenolen oder Phenoxyalkanolen mit Acryloylchlorid oder Methacryloylchlorid, die Umsetzung der Glycidyläther von Phenolen mit Acryl- oder Methacrylsäure und die Reaktion von Phenolen mit Glycidylacrylat oder Glycidylmethacrylat.

Verbindungen der Formeln XVI und XVII kann man dadurch herstellen, daß man Trimellithsäureanhydrid mit Allyl- oder Methallylalkohol umsetzt und nötigenfalls die Allylgruppe isomerisiert, was die gemischten Isomeren der Formel

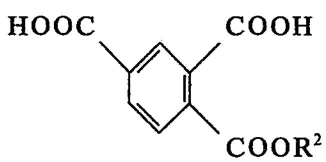

(XXI)

und

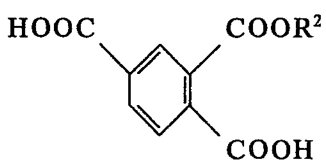

(XXII)

ergibt.

Die Verbindungen der Formeln XXI oder XXII kann man dann auf an sich bekannte Weise mit Glycidylacrylat oder Glycidylmethacrylat zur Reaktion bringen, was die Produkte der Formeln XVI oder XVII, worin $R^6$ eine Gruppe der Formel I darstellt, liefert. Ferner kann man dieselben Produkte auch dadurch erhalten, daß man die Dicarbonsäuren der Formeln XXI oder XXII in ihre Diglycidylester überführt und die Epoxidgruppen in an sich bekannter Weise mit Acrylsäure oder Methacrylsäure öffnet.

Auch kann man die Verbindungen der Formeln XXI oder XXII mit 1 bis 6 Molanteilen Äthylenoxyd oder Propylenoxyd behandeln und dann die entstandenen Addukte mit Acrylsäure oder Methacrylsäure zu den Produkten der Formeln XVI oder XVII, worin $R^6$ eine Gruppe der Formel II darstellt, verestern.

Verbindungen der Formel XIX lassen sich leicht aus handelsüblichen Benzophenon-3,4,3',4'-tetracarbonsäuredianhydrid herstellen. Beim Erhitzen dieses Dianhydrids mit Allylalkohol oder Methallylalkohol bilden sich somit die Verbindungen der Formel XIX, worin eins von $R^7$ und $R^8$ und eins von $R^9$ und $R^{10}$ je eine Allyl- oder Methallylgruppe und die verbleibenden Symbole je ein Wasserstoffatom bedeuten, d.h. Benzophenon-3,4,3',4'-tetracarbonsäure-X,X'-diallylester und die entsprechenden X,X'-Dimethallylester. (Eine direkte Veresterung zum 3,4,3',4'-tetraallyl- oder Tetramethallylester ist im allgemeinen nicht durchführbar.)

Es ist anzunehmen, daß die Produkte die drei möglichen Isomeren enthalten, nämlich die 3,3'-Dicarboxy-4,4'-bis-(allyloxycarbonyl)-, 4,4'-Dicarboxy-3,3'-bis-(allyloxycarbonyl)- bzw. 3,4'-Dicarboxy-3',4-bis-(allyloxycarbonyl)-derivate des Benzophenons sowie bei Verwendung von Methallylalkohol deren Methallylhomologe. Die Anwendbarkeit dieser Erfindung hängt jedoch nicht davon ab, ob diese Annahme zutrifft.

Umsetzung dieser Diester-dicarbonsäuren mit Epichlorhydrin und nachfolgende Dehydrochlorierung ergibt auf die für die Herstellung von Glycidylestern aus Carbonsäuren bekannte Weise Benzophenon-3,4,3',4'-tetracarbonsäure-X,X'-diallylester-Y,Y'-diglycidylester bzw. die entsprechenden Methallylverbindungen.

Umsetzung der Benzophenon-3,3',4,4'-tetracarbonsäure-X,X'-diallylester-Y,Y'-diglycidylester mit Acrylsäure oder Methacrylsäure führt zu den X,X'-Diallyl-Y,Y'-bis-(3-(acryloyloxy)-2-hydroxypropyl)-tetraestern oder den entsprechenden X,X'-Diallyl-Y,Y'-bis-(3-(methacryloyloxy)-2-hydroxypropyl)-tetraestern, d.h. Verbindungen der Formel XIX, worin eins von $R^7$ und $R^8$ und eins von $R^9$ und $R^{10}$ je eine Allylgruppe und die verbleibenden Symbole $R^7$ und $R^8$ bzw. $R^9$ und $R^{10}$ jeweils eine Gruppe der Formel XX darstellen. Methoden zur Umsetzung von Glycidylestergruppen mit Acrylsäure und Methacrylsäure sind wohlbekannt. Die obenerwähnten X,X'-Diallyl-Y,Y'-bis-(3-(acryloyloxy)-2-hydroxypropyl)-tetraester oder X,X'-Diallyl-Y,Y'-bis-(3-(methacryloyloxy)-2-hydroxypropyl)-tetraester sind auch durch

Umsetzung von Benzophenon-3,4,3',4'-tetracarbonsäure-X,X'-diallylestern mit 2 Molanteilen Glycidylacrylat oder Glycidylmethacrylat erhältlich. Die Methallylhomologen können auf ähnliche Weise hergestellt werden.

Verbindungen der Formel XIX, worin eins von $R^7$ und $R^8$ und eins von $R^9$ und $R^{10}$ je eine Allylgruppe und die verbleibenden Symbole je eine Gruppe der Formel XX darstellen, wobei $R^6$ eine Gruppe der Formel II bedeutet, lassen sich dadurch erhalten, daß man Benzophenon-3,3',4,4'-tetracarbonsäure-X,X'-diallylester mit 2 bis 6 Molanteilen Äthylenoxyd oder Propylenoxyd umsetzt und anschließend mit 2 Molanteilen Acryloylchlorid, Methacryloylchlorid, Acrylsäure oder Methacrylsäure verestert.

Eine große Zahl Polymercaptane eignet sich zur Verwendung als Komponente b) in den erfindungsgemäßen Zusammensetzungen. Die Mercaptane sind vorzugsweise frei von irgendwelchen Allyl-, Methallyl-, 1-Propenyl-, Acryloyl- oder Methacryloylgruppen und besitzen vorzugsweise ein Molekulargewicht von höchstens 3000. Die eingesetzten Polymercaptane enthalten üblicherweise höchstens sechs direkt an aliphatische Kohlenstoffatome gebundene Mercaptangruppen pro Molekül.

Eine Gruppe umfaßt Ester von Monomercaptoalkylencarbonsäuren mit mehrwertigen Alkoholen sowie Ester von aliphatischen einwertigen Monomercaptoalkoholen mit Polycarbonsäuren.

Weitere bevorzugte derartige Ester entsprechen der Formel

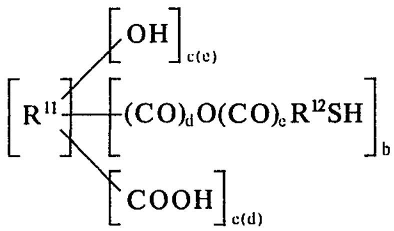

(XXIII)

worin $R^{11}$ einen aliphatischen oder araliphatischen, gegebenenfalls in der Kette durch höchstens ein Äthersauerstoffatom unterbrochenen Kohlenwasserstoffrest mit 2 bis 60 Kohlenstoffatomen und $R^{12}$ einen aliphatischen, gegebenenfalls in der Kette durch höchstens eine Carbonyloxygruppe unterbrochenen Kohlenwasserstoffrest mit vorzugsweise 1 bis 4 Kohlenstoffatomen darstellen, b eine ganze Zahl von 2 bis 6, c null oder eine solche positive ganze Zahl von höchstens 3, daß (b + c) höchstens 6 betragen (wobei Symbole wie c(d) algebraisch zu betrachten sind), sowie d und e je null oder 1 aber verschieden sind.

Noch weitere bevorzugte Ester sind Polymercaptane der Formel XXIII, die ebenfalls der Formel

$$R^{13}(OCOR^{14}SH)_b \qquad (XXIV)$$

worin b die unter der Formel XXIII bezeichnete Bedeutung hat und $R^{13}$ einen aliphatischen Kohlenwasserstoffrest mit 2 bis 10 Kohlenstoffatomen und $R^{14}$ $-(CH_2)-$, $-(CH_2)_2-$ oder $-CH(CH_3)-$ bedeuten, entsprechen.

Eine weitere Klasse umfaßt mercaptanhaltige Ester, einschließlich Estern von Monomercaptodicarbonsäuren der Formel

$$R^{17}\!-\!\left[(O)_d-CO(O)_e-R^{15}(O)_e-CO(O)_d-R^{16}SH\right]_f \qquad (XXV)$$

worin d und e die unter der Formel XXIII bezeichneten Bedeutungen haben, f eine ganze Zahl von 1 bis 6 ist, $R^{15}$ einen zweiwertigen organischen Rest darstellt, der über eines oder mehrere seiner Kohlenstoffatome an die bezeichneten —O- oder —CO-Einheiten gebunden ist, $R^{16}$ einen zweiwertigen organischen Rest bedeutet, der über eines oder mehrere seiner Kohlenstoffatome an die bezeichnete —SH-Gruppe und —O- oder —CO-Einheit gebunden ist, und $R^{17}$ für einen organischen Rest steht, der bei f = 1 mindestens eine aliphatische —SH-Gruppe enthalten muß und über eines bzw. mehrere seiner Kohlenstoffatome an die bezeichnete(n) benachbarte(n) —O- oder —CO-Einheit bzw. Einheiten gebunden ist.

Ist d null, so bedeutet $R^{15}$ vorzugsweise eine gesättigte aliphatische unverzweigte, gegebenenfalls durch eine oder mehrere Methylgruppen und eine oder mehrere Mercaptangruppen substituierte und gegebenenfalls durch ein oder mehrere Äthersauerstoffatome und eine mehrere Carbonyloxygruppen unterbrochene Kohlenwasserstoffkette mit 2 bis 20 Kohlenstoffatomen. Ist d 1, so bedeutet $R^{15}$ vorzugsweise (i) eine gesättigte aliphatische, gegebenenfalls eine Mercaptangruppe tragende Kohlenwasserstoffgruppe mit 2 bis 10 Kohlenstoffatomen, (ii) eine cycloaliphatisch-aliphatische, gegebenenfalls eine oder mehrere äthylenisch ungesättigte Doppelbindungen aufweisende Kohlenwasserstoffgruppe mit 5 bis 34 Kohlenstoffatomen oder (iii) eine einkernige Arylenkohlenwasserstoffgruppe mit 6 bis 12 Kohlenstoffatomen.

Wenn d null ist, bedeutet $R^{16}$ vorzugsweise eine gesättigte aliphatische, gegebenenfalls eine Carboxylgruppe tragende Kohlenwasserstoffgruppe mit 1 bis 3 Kohlenstoffatomen sowie, wenn d 1 ist,

eine gesättigte aliphatische, gegebenenfalls durch eine Hydroxylgruppe oder ein Chloratom substituierte Kohlenwasserstoffgruppe mit 2 bis 4 Kohlenstoffatomen.

$R^{17}$ bedeutet vorzugsweise (iv) eine aliphatische oder cycloaliphatisch-aliphatische, gegebenenfalls mindestens eine aliphatische Mercaptangruppe tragende Kohlenwasserstoffgruppe mit 2 bis 51 Kohlenstoffatomen oder (v) eine einkernige oder zweikernige Arylenkohlenwasserstoffgruppe mit 6 bis 15 Kohlenstoffatomen oder (vi) eine durch mindestens ein Äthersauerstoffatom unterbrochene und gegebenenfalls durch mindestens eine aliphatische Mercaptangruppe substituierte Kette von 4 bis 20 Kohlenstoffatomen oder (vii) eine durch mindestens eine Carbonyloxygruppe und gegebenenfalls durch mindestens ein Äthersauerstoffatom unterbrochene und gegebenenfalls durch mindestens eine aliphatische Mercaptangruppe substituierte Kette von 6 bis 50 Kohlenstoffatomen.

Eine dritte Klasse umfaßt Ester und Äther der allgemeinen Formel

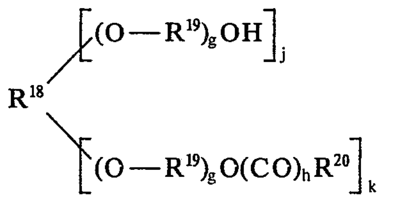

(XXVI)

worin $R^{18}$ den Rest eines mehrwertigen Alkohols nach Wegnahme von (j + k) alkoholischen Hydroxylgruppen, insbesondere einen aliphatischen Kohlenwasserstoffrest mit 2 bis 10 Kohlenstoffatomen darstellt, die $R^{19}$ jeweils eine Alkylengruppe mit einer Kette von mindestens 2 und höchstens 6 Kohlenstoffatomen zwischen den bezeichneten aufeinanderfolgenden Sauerstoffatomen bedeuten, $R^{20}$ für einen aliphatischen, mindestens eine Mercaptangruppe enthaltenden Rest mit 1 bis 6 Kohlenstoffatomen steht sowie g eine positive ganze Zahl, vorzugsweise eine solche, daß das Durchschnittsmolekulargewicht des Polymercaptans 2000 nicht übersteigt, h null oder 1, j null oder eine solche positive ganze Zahl, daß (j + k) höchstens 6 beträgt, und k eine ganze Zahl von 2 bis 6 sind.

Die Gruppen $R^{19}$ in einzelnen Poly-(oxyalkylen)-ketten können gleich oder verschieden und gegebenenfalls durch z.B. Phenyl- oder Chlormethylgruppen substituiert sein. Vorzugsweise sind dies $-C_2H_4$- oder $-C_3H_6$-Gruppen.

Unter den Verbindungen der Formel XXVI werden die Ester der Formel

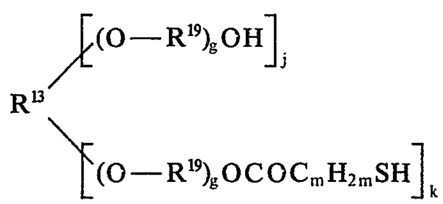

(XXVII)

und die Äther der Formel

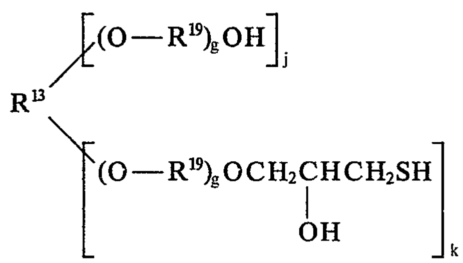

(XXVIII)

worin $R^{13}$ die unter der Formel XXIV und $R^{19}$, g, j und k die unter der Formel XXVI angegebenen Bedeutungen haben und m 1 oder 2 ist, bevorzugt.

Eine vierte Klasse von als Komponente b) geeigneten Polymercaptanen umfaßt Sulfide mit Mercaptanendgruppen der allgemeinen Formel

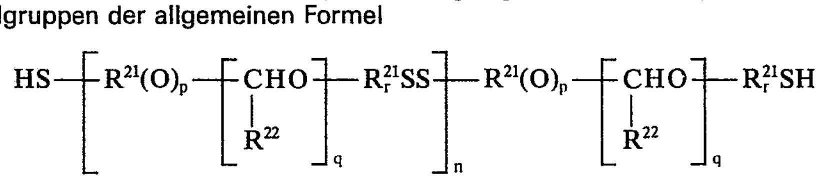

(XXIX)

worin die $R^{21}$ jeweils eine Alkylenkohlenwasserstoffgruppe mit 2 bis 4 Kohlenstoffatomen bedeuten, $R^{22}$ ein Wasserstoffatom oder eine Methyl- oder Äthylgruppe darstellt, n eine ganze Zahl mit einem

Mittelwert von mindestens 1 und vorzugsweise eine solche, daß das Durchschnittsmolekulargewicht des Sulfids höchstens 1000 beträgt, und p entweder null, wobei q und r dann beide ebenfalls null sind, oder 1, wobei q dann null oder 1 und r 1 ist, sind.

Bevorzugt werden solche Sulfide der Formel XXIX, worin $R^{22}$ Wasserstoff bedeutet sowie p und q je 1 sind, wobei n einen solchen Wert annimmt, daß das Molekulargewicht des Sulfids 500 bis 800 beträgt.

Eine fünfte Klasse als Komponente b) geeigneter Polymercaptane umfaßt Polybutadiene mit Mercaptanendgruppen der Formel

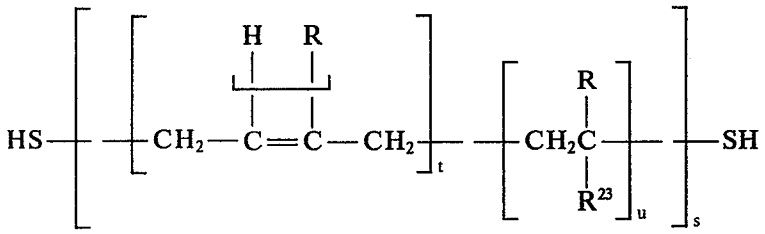

(XXX)

worin die R jeweils die unter der Formel II bezeichnete Bedeutung haben, $R^{23}$ für $-CN$, $-COOH$, $-CONH_2$, $-COOR^{24}$, $-C_6H_5$ oder $-OCOR^{24}$ steht, wobei $R^{24}$ eine Alkylgruppe mit eins bis acht Kohlenstoffatomen bedeutet, sowie t eine ganze Zahl von mindestens eins, u null oder eine positive ganze Zahl und s eine ganze Zahl größer als eins, vorzugsweise eine solche, daß das Molekulargewicht des Polymercaptans im Zahlenmittel 1000 nicht übersteigt, sind.

Vorzugsweise entsprechen die Polymercaptane der Formel XXX ferner der Formel

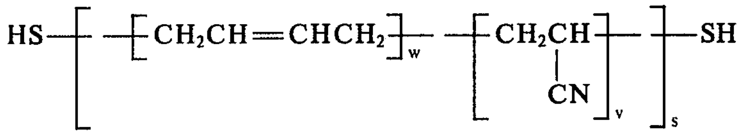

(XXXI)

worin v entweder null, wobei w dann 1 ist, oder 1, wobei w dann eine ganze Zahl von 2 bis 5 ist, darstellt und s die unter der Formel XXX bezeichnete Bedeutung hat.

Eine sechste Klasse von Polymercaptanen zur Verwendung als Komponente b) umfaßt Oxyalkylenverbindungen mit Mercaptanendgruppen der allgemeinen Formel

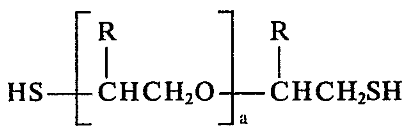

(XXXII)

worin die R sowie a jeweils die unter der Formel II bezeichnete Bedeutung haben.

Eine siebente Klasse umfaßt Poly-(thioglykolate) und Poly-(mercaptopropionate) des Tris-(2-hydroxyäthyl)-isocyanurats und Tris-(2-hydroxypropyl)-isocyanurats, d.h. Verbindungen der Formel

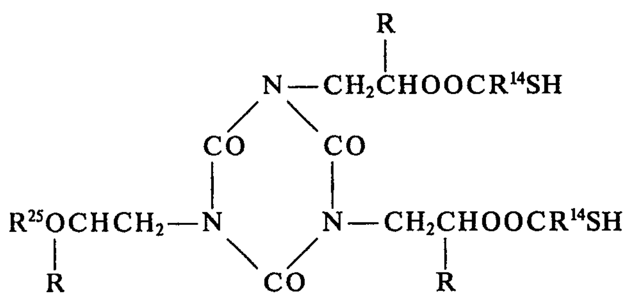

(XXXIII)

worin die R jeweils die unter der Formel I und die $R^{14}$ jeweils die unter der Formel XXIV bezeichnete Bedeutung haben und $R^{25}$ eine Gruppe $-OCR^{14}SH$ oder ein Wasserstoffatom darstellt.

Besonders bevorzugte Polymercaptane sind die Poly-(thioglykolate) und Poly-(2- oder 3-mercaptopropionate) aliphatischer mehrwertiger Alkohole mit 2 bis 6 Kohlenstoffatomen.

Bei der Photopolymerisation der erfindungsgemäßen Zusammensetzungen verwendet man vorzugsweise aktinische Strahlung von 200—600 nm Wellenlänge. Als aktinische Strahlungsquelle eignen sich unter anderem Kohlelichtbögen, Quecksilberdampflichtbögen; Fluoreszenzlampen mit ultraviolettes Licht ausstrahlenden Leuchtstoffen, Argon- und Xenonglimmlampen, Wolframlampen und photographische Flutlampen. Darunter sind Quecksilberdampflichtbögen, insbesondere Höhensonnen, fluoreszierende Höhensonnen und Metallhalogenidlampen am besten geeignet. Die zur Belichtung der

photopolymerisierbaren Zusammensetzung erforderliche Zeit hängt dabei von verschiedenen Faktoren ab, unter anderem beispielsweise den jeweils verwendeten Verbindungen, der Art der Lichtquelle und deren Abstand von der bestrahlten Zusammensetzung. Der mit der Photopolymerisationstechnik vertraute Fachmann kann ohne weiteres geeignete Zeiten festlegen.

Zur Photopolymerisation enthalten die Zusammensetzungen (außer denen, die eine Verbindung der Formel XIX enthalten) einen zugesetzten Photoinitiator, d. h. einen Katalysator, der bei Bestrahlung in einen angeregten Zustand übergeht, der zur Bildung freier Radikale führt, die dann die Polymerisation der Zusammensetzung einleiten. Als Photoinitiatoren eignen sich beispielsweise organische Peroxyde und Hydroperoxyde, $\alpha$-halogensubstituierte Acetophenone wie Trichlormethyl-4'-tert.-butylphenylketon, $\alpha$-hydroxy-$\alpha$-alkylsubstituierte Acetophenone wie 2-Hydroxy-2-methyl-1-phenylpropanon-1, Benzoin und seine Alkyläther (z. B. der n-Butyläther), $\alpha$-Methylbenzoin, Benzophenone wie Benzophenon selbst und 4,4'-Bis-(dimethylamino)-benzophenon, O-Alkoxycarbonylderivate eines Oxims von Benzil oder 1-Phenylpropan-1,2-dion, wie Benzil-(O-äthoxycarbonyl)-$\alpha$-monoxim und 1-Phenylpropan-1,2-dion-2-(O-äthoxycarbonyl)-oxim, Benzilacetale, z. B. dessen Dimethylacetal, substituierte Thioxanthone, z. B. 2-Chlorthioxanthon, Anthrachinone und Photoredoxsysteme, die ein Gemisch eines Phenothiazinfarbstoffs (z. B. Methylenblau) oder eines Chinoxalins (z. B. ein Metallsalz der 2-(m- oder p-Methoxyphenyl)-chinoxalin-6'- oder 7'-sulfonsäure) mit einem Elektronendonator wie Benzolsulfinsäure oder einer anderen Sulfinsäure oder deren Salz wie das Natriumsalz enthalten, oder ein Arsin, ein Phosphin oder Thioharnstoff.

Geeignete Photoinitiatoren lassen sich ohne weiteres durch routinemäßige Versuche finden. Im allgemeinen arbeitet man 0,05 bis 10 Gew.-%, und vorzugsweise 0,5 bis 5 Gew.-%, Photoinitiator ein, bezogen auf das kombinierte Gewicht der Komponenten a) und b).

Der Begriff »Radikalkatalysator« soll sich hierin auf Substanzen beziehen, und aktinische Strahlung ist dabei nicht einbegriffen. Zur Polymerisation der erfindungsgemäßen Zusammensetzungen geeignete Radikalkatalysatoren werden durch Hitze aktiviert, d. h. sie besitzen eine ziemlich schnelle Polymerisationswirkung nur bei Temperaturen oberhalb normaler Raumtemperatur, und sie umfassen 2,2'-Azobis-(2-methylpropionitril) und organische oder anorganische Peroxyde, z. B. Persäuren und deren Salze und Ester, wie Peressigsäure, Perbenzoesäure, Perphthalsäure, Diisopropylperoxydicarbonat, Ammonium- oder ein Alkaliperborat, Ammonium- oder ein Alkalipersulfat, Acylperoxyde wie Benzoylperoxyd und ferner z. B. Cumylperoxyd, Cumolhydroperoxyd, Wasserstoffperoxyd, Cyclohexanonperoxyd und Äthylmethylketonperoxyd. Ein tertiäres Amin z. B. Dimethylanilin oder ein Kobaltsikkativ z. B. Kobaltnaphthenat können als Beschleuniger mit den Peroxyden mitverwendet werden.

Die Menge Radikalkatalysator, gegebenenfalls einschließlich eines Beschleunigers dafür, beträgt üblicherweise 0,05 bis 5 Gew.-%, und vorzugsweise 0,1 bis 1 Gew.-%, berechnet auf das Gesamtgewicht der Komponenten a) und b). Es können die üblichen Methoden für die durch Radikalkatalysatoren eingeleitete Polymerisation angewandt werden.

Wie schon erwähnt sind die erfindungsgemäßen Zusammensetzungen als Oberflächenbeschichtungen verwendbar. Sie können, vorzugsweise als Flüssigkeit, auf ein Substrat wie Stahl, Aluminium, Kupfer, Chrom, Cadmium, Zink, Zinn, Glas, Keramik, Papier oder Holz aufgebracht und photopolymerisiert oder mittels des Radikalkatalysators zum Polymerisieren gebracht werden. Erfolgt die Photopolymerisation durch Bestrahlung eines Teils der Beschichtung wie durch eine Maske, so kann man die unbelichteten Bereiche mit einem Lösungsmittel zur Entfernung der nichtpolymerisierten Anteile waschen, während die photopolymerisierten, unlöslichen Bereiche an Ort und Stelle verbleiben. Somit kann man die erfindungsgemäßen Zusammensetzungen zur Herstellung von Druckplatten und gedruckten Schaltungen verwenden. Methoden zur Herstellung von Druckplatten und gedruckten Schaltungen aus photopolymerisierbaren Zusammensetzungen sind wohlbekannt (siehe z. B. britische Patentschrift Nr. 1 495 746).

Gegenstand dieser Erfindung sind dementsprechend Artikel, die auf ihrer Oberfläche eine Beschichtung tragen, welche aus einem nach einem erfindungsgemäßen Verfahren hergestellten polymerisierten Produkt besteht.

Die erfindungsgemäßen Zusammensetzungen sind weiterhin als Klebstoffe verwendbar. Bei Verwendung von Strahlung, um die Polymerisation einzuleiten, kann man eine Schicht der Zusammensetzung zwischen zwei Oberflächen von Gegenständen einbringen, von denen mindestens einer für aktinische Strahlung durchlässig ist, z. B. aus Glas oder Poly-(methylmethacrylat). Als weitere zu klebende Körper eignen sich unter anderem Metalle wie Eisen, Zink, Kupfer, Chrom, Nickel, Aluminium, Cadmium, Zink und Zinn, Keramik, Holz, Kautschuk und Kunststoffe wie Acrylharze. Der Aufbau wird dann durch mindestens eine für solche Strahlung durchlässige Oberfläche hindurch mit aktinischer Strahlung beaufschlagt. Bei Verwendung von Radikalkatalysatoren zum Einleiten der Polymerisation kann man eine Schicht der einen solchen Katalysator enthaltenden Zusammensetzungen zwischen und in Berührung mit den beiden zu verklebenden Oberflächen einbringen und den Aufbau erhitzen.

Gegenstand dieser Erfindung sind dementsprechend Artikel mit Oberflächen, die mittels eines nach einem erfindungsgemäßen Verfahren hergestellten polymerisierten Produkts verklebt sind.

Die Zusammensetzungen sind auch bei der Herstellung von faserverstärkten Verbundstoffen einschließlich Plattenpreßmassen verwendbar. Dabei kann man sie in flüssiger Form direkt auf Verstärkungsfasern (einschließlich Spinnfäden, Endlosfäden und Whiskers) auftragen, die in Form von

Gewebe oder Faservlies, kettenstarken Schnitten oder Stapelseide vorliegen, insbesondere Fasern aus Glas, Bor, Edelstahl, Wolfram, Aluminiumoxyd, Siliciumcarbid, Asbest, Kaliumtitanatwhiskers, einem aromatischen Polyamid wie Poly-(m-phenylenisophthalamid), Poly-(p-phenylenterephthalamid) oder Poly-(p-benzamid), Polyäthylen oder Kohlenstoff. Die imprägnierten Fasern werden dann bestrahlt, oder der Radikalkatalysator wird aktiviert.

Ferner kann man die erfindungsgemäßen Zusammensetzungen auch zur Herstellung von Spachtelmassen, verwenden, sowie als Tauchbeschichtungszusammensetzungen, wobei ein zu beschichtender Artikel in die erfindungsgemäße flüssige Zusammensetzung getaucht und wieder entnommen und dann bestrahlt wird, so daß die anhaftende Beschichtung polymerisiert. Ferner kann man die Zusammensetzung auch durch Aktivierung eines Radikalkatalysators zur Verfestigung und Härtung bringen.

Es wurde weiterhin gefunden, daß es möglich ist, die erfindungsgemäßen Zusammensetzungen in zwei Stufen zu härten: eine solche, einen hitzeaktivierbaren Radikalkatalysator und, wenn nötig, ebenfalls einen Photoinitiator enthaltende Zusammensetzung kann durch Belichtung mit einer aktinischen Strahlungsdosis, die zur völligen Polymerisation nicht ausreicht, teilweise polymerisiert und danach erhitzt werden, so daß der Radikalkatalysator aktiviert und die Härtung vervollständigt wird.

Gegenstand dieser Erfindung sind deshalb weiterhin eine Zusammensetzung, die eine Komponente a) und eine Komponente b) wie oben erwähnt, wenn nötig einen Photoinitiator und einen hitzeaktivierbaren Radikalkatalysator enthält, sowie ein Verfahren zur Härtung einer solchen Zusammensetzung, welches darin besteht, daß man diese durch Belichtung mit aktinischer Strahlung teilweise polymerisiert und dann zur Aktivierung des hitzeaktivierbaren Radikalkatalysators erhitzt.

So kann man einen Film einer flüssigen Zusammensetzung so weit bestrahlen, daß die Zusammensetzung zur Verfestigung und Bildung einer Klebfolie gebracht wird, aber nicht so weit, daß die Polymerisation zu Ende geht. Die Klebfolie kann dann zwischen zwei Substrate eingebracht und erhitzt werden, um den in der Zusammensetzung enthaltenen Radikalkatalysator zu aktivieren und die Härtung zuendezuführen. Ferner kann man die Klebfolie auf eine Lage Verstärkungsfasern auflegen und durch Anwendung von Druck um die Fasern herumfließen lassen und das imprägnierte Gebilde zur gewünschten Gestalt formen oder mit weiteren solchen Lagen aufeinanderschichten und dann das bzw. die imprägnierten Gebilde zur Aktivierung des Radikalkatalysators erhitzen.

Verstärkungsfasern können ferner direkt mit einer solchen Zusammensetzung in flüssiger Form imprägniert werden, die Fasern werden dann bestrahlt, um die Zusammensetzung zur Verfestigung zu bringen, der Artikel wird dann zu irgendeiner gewünschten Gestalt geformt oder mit einem weiteren solchen Artikel übereinandergeschichtet, und anschließend wird Hitze zur Einwirkung gebracht, um den Radikalkatalysator zu aktivieren und die Härtung zu vervollständigen.

Eine weitere Anwendung besteht darin, daß man einen Artikel in einer solchen flüssigen Zusammensetzung tauchbeschichtet, ihn dann bestrahlt, um die anhaftende Beschichtung polymerisieren zu lassen, und dann den Artikel erhitzt, um den darin enthaltenen Radikalkatalysator zu aktivieren und so die Härtung zu vervollständigen.

Eine weitere Anwendung besteht darin, daß man einen hohlen Formkörper nach einem Wickelverfahren bildet, bei dem ein Endloskabel aus Verstärkungsfaser mit einer solchen Zusammensetzung imprägniert und unter Belichtung des Wickels mit aktinischer Strahlung auf einen Dorn aufgewickelt und der Wickel abgenommen und dann erhitzt wird, um den Radikalkatalysator zur Vervollständigung der Härtung zu aktivieren. Ein solcher Wickel besitzt vor dem Erhitzen eine größere Biegsamkeit als ein an Ort und Stelle gehärteter und läßt sich deshalb leichter vom Dorn abnehmen.

Noch eine weitere Anwendung betrifft die Herstellung von Plattenpreßmassen, wobei Verstärkungsfasern mit einer solchen flüssigen Zusammensetzung beschichtet, dann zu Lagen geformt und direkt sowie, wenn nötig, durch Stützfolien hindurch zum teilweisen Polymerisieren der Zusammensetzung bestrahlt werden und schließlich die Zusammensetzung erhitzt wird, um sie nach dem Formen zu irgendeiner gewünschten Gestalt zu härten.

Erfindungsgemäße Zusammensetzungen können in Zweikomponentenpackungen vertrieben werden, wobei die eine die Komponente a) und die andere die Komponente b) enthält. Im übrigen kann man die Zusammensetzungen unter Schutz vor aktinischer Strahlung und freien Radikalquellen als Gemisch lagern, bis sie zum Gebrauch benötigt werden.

Die nachfolgenden Beispiele erläutern die Erfindung. Dabei sind Teile Gewichtsteile und die Temperaturen in Grad Celsius.

Die Biegefestigkeiten stellen den Durchschnitt aus drei Ergebnissen dar und wurden nach British Standard Nr. 2782, Methode 304B bestimmt. Die Überlappungsscherfestigkeit stellen ebenfalls den Durchschnitt aus drei Ergebnissen dar und wurden gemäß British Ministry of Aviation Aircraft Specification DTD 5577, November 1965, bestimmt.

Das als Zwischenprodukt verwendete 2,2-Bis-(3-allyl-4-hydroxyphenyl)-propan wurde wie in der offengelegten britischen Patentanmeldung Nr. 2 012 780 A beschrieben hergestellt.

Bis-(3-allyl-4-hydroxyphenyl)-methan bzw. 3,3'-Diallyl-4,4'-dihydroxydiphenyl können auf die gleiche Weise aus Bis-(4-hydroxyphenyl)-methan bzw. 4,4'-Dihydroxydiphenyl hergestellt werden.

Die Herstellung von 2,2-Bis-(3-(1-propenyl)-4-hydroxyphenyl)-propan ist ebenfalls in der offengelegten britischen Patentanmeldung Nr. 2 012 780 A beschrieben.

2,2-Bis-(3,5-diallyl-4-hydroxyphenyl)-propan wurde dadurch hergestellt, daß man 2,2-Bis-(3-allyl-4-hydroxyphenyl)-propan in seinen Diallyläther überführt und diesen einer Claisen-Umlagerung unterwirft, wie in der offengelegten britischen Patentanmeldung Nr. 2 012 780 A beschrieben. Dessen Allyldoppelbindungsgehalt betrug 10,3 val/kg.

Eine ähnliche Umlagerung von 1,3-Diallyloxybenzol lieferte ein Gemisch aus den zwei isomeren, substituierten Resorcinen 1,3-Diallyl-2,4-dihydroxybenzol und 1,5-Diallyl-2,4-dihydroxybenzol. Das Gemisch wies einen Allyldoppelbindungsgehalt von 10,53 val/kg auf.

Herstellung von 2,2-Bis-(3-allyl-4-(3-(methacryloyloxy)-2-hydroxypropoxy)-phenyl)-propan

Arbeitsweise I

Man erhitzt ein Gemisch aus 103 g 2,2-Bis-(3-allyl-4-hydroxyphenyl)-propan und 95 g Glycidylmethacrylat (d. h. 2 Molanteile) mit einem Gehalt von 0,8 g 2,6-Di-tert.-butyl-p-kresol und 0,4 g Tetramethylammoniumchlorid im Verlauf von 1 Stunde auf 110° und erhitzt weitere 3½ Stunden auf Temperatur, wonach der Epoxidgehalt des Gemischs vernachläßigbar ist. Das Produkt entspricht weitgehend der Formel

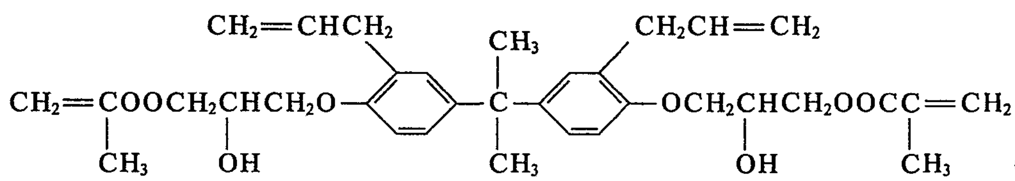

(XXXIV)

Arbeitsweise II

Man erhitzt 2,2-Bis-(3-allyl-4-(glycidyloxy)-phenyl)-propan mit einem Epoxidgehalt von 4,7 val/kg (82 g) in Gegenwart von Tetramethylammoniumchlorid (0,35 g) und 2,6-Di-tert.-butyl-p-kresol (0,23 g) auf 100°. Dann tropft man im Verlauf von 1 Stunde Methacrylsäure (34 g, d.h. 2 Molanteile) dazu und rührt weitere 3½ Stunden bei 100°, wonach der Epoxidgehalt des Gemischs vernachlässigbar ist. Das verbleibende Produkt entspricht weitgehend der Formel XXXIV und stellt eine Flüssigkeit mit einer Viskosität von 108 Pa-s dar.

Herstellung von 2,2-Bis-(3-allyl-4-(methacryloyloxy)-phenyl)-propan

Man tropft 40,3 g Methacryloylchlorid im Verlauf von 1 Stunde unter Rühren zu einem Gemisch aus 68,5 g 2,2-Bis-(3-allyl-4-hydroxyphenyl)-propan-dinatriumsalz, 250 ml Toluol und 0,12 g 2,6-Di-tert.-butyl-p-kresol, wobei man die Temperatur des Gemischs während der Zugabe unter 45° hält. Nach weiteren 2½ Stunden Rühren wird abfiltriert und das Filtrat durch Anlegen eines Vakuums (Wasserstrahlpumpe) und danach eines Hochvakuums vom Lösungsmittel befreit. Das gewünschte Produkt der Formel

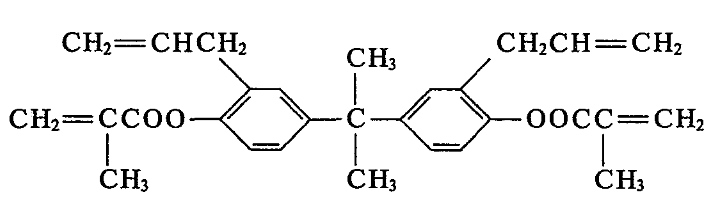

(XXXV)

verbleibt in praktisch quantitativer Ausbeute als fast farblose Flüssigkeit mit einer Viskosität von 3,6 Pa-s.

Herstellung von 1-(Allyloxycarbonyl)-2,4- und -2,5-bis-(3-(methacryloyloxy)-2-hydroxypropoxycarbonyl)-benzol

Man erhitzt ein Gemisch aus umkristallisiertem Trimellithsäureanhydrid (57,6 g) und Allylalkohol (175 g) 4½ Stunden unter Rückfluß und destilliert dann den überschüssigen Allylalkohol bei vermindertem Druck ab, wobei 74,5 g von Monoallylestern der Benzol-1,2,4-tricarbonsäure als weißer Feststoff zurückbleiben.

Das so erhaltene Gemisch (50 g) aus Allyl-2,4-dicarboxybenzoat und Allyl-2,5-dicarboxybenzoat wird in Gegenwart von 0,17 g Trimethylammoniumchlorid und 0,2 g 2,6-Di-tert.-butyl-p-kresol 12 Stunden bei 60° mit 57 g Glycidylmethacrylat (2 Mol) erhitzt, was ein Gemisch der Verbindungen der Formel

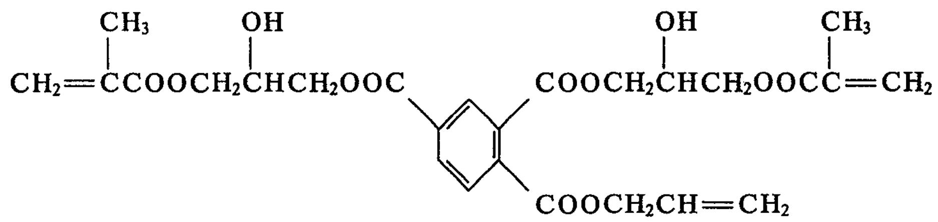

(XXXVI)

und

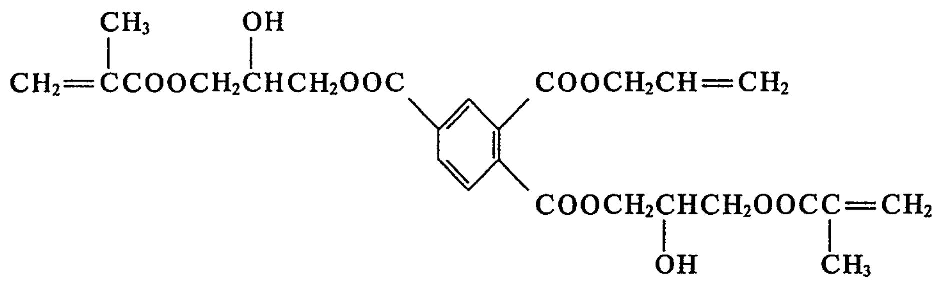

(XXXVII)

ergibt.

Herstellung von 2,2-Bis-(3,5-diallyl-4-(3-methacryloyloxy)-2-hydroxypropoxy)-phenyl)-propan

Man erhitzt ein Gemisch aus 2,2-Bis-(3,5-diallyl-4-hydroxyphenyl)-propan (194 g), Glycidylmethacrylat (154 g), Tetramethylammoniumchlorid (0,7 g) und 2,6-Di-tert.-butyl-p-kresol (2,8 g) im Verlauf von 1 Stunde auf 95° und rührt weitere 3,5 Stunden bei dieser Temperatur, was die Verbindung der Formel

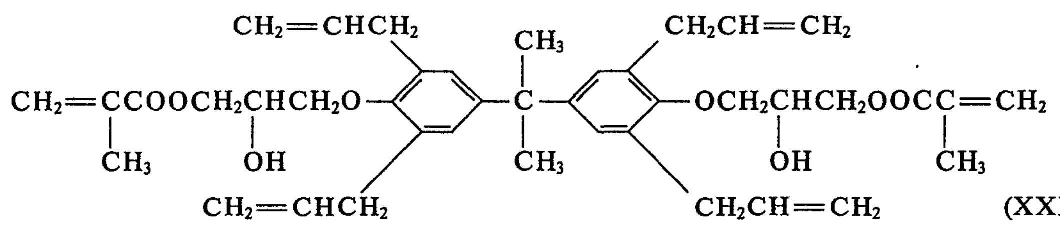

(XXXVIII)

liefert.

Herstellung von 2,2-Bis-(3-(1-propenyl)-4-(3-(methacryloyloxy)-2-hydroxypropoxy)-phenyl)-propan

Man erhitzt ein Gemisch aus 2,2-Bis-(3-(1-propenyl)-4-(glycidyloxy)-phenyl)-propan (49,2 g), Tetramethylammoniumchlorid (0,1 g) und Hydrochinon (0,15 g) auf 80° und tropft dann im Verlauf von 1,5 Stunden Methacrylsäure (20,4 g) dazu. Das Gemisch wird 8 Stunden bei 80° weitergerührt, was die Verbindung der Formel

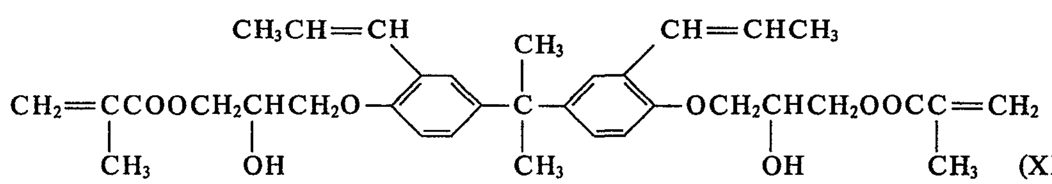

(XXXIX)

liefert.

Herstellung von 1,3- und 1,5-Diallyl-2,4-bis-(3-(methacryloyloxy)-2-hydroxypropoxy)-benzol

Man erhitzt ein Gemisch (85 g) aus 1,3-Diallyl-2,4-dihydroxybenzol und 1,5-Diallyl-2,4-dihydroxybenzol mit 127 g Glycidylmethacrylat, 0,8 g 2,6-Di-tert.-butyl-p-kresol und 0,4 g Tetramethylammoniumchlorid im Verlauf von 1 Stunde auf 100° und rührt das Ganze noch weitere 5 Stunden bei dieser Temperatur, was ein Gemisch von Verbindungen der Formel

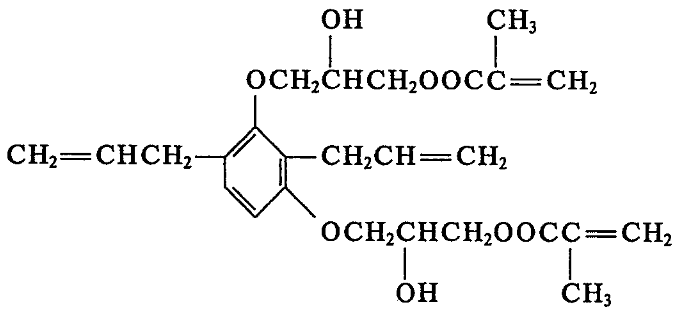

(XL)

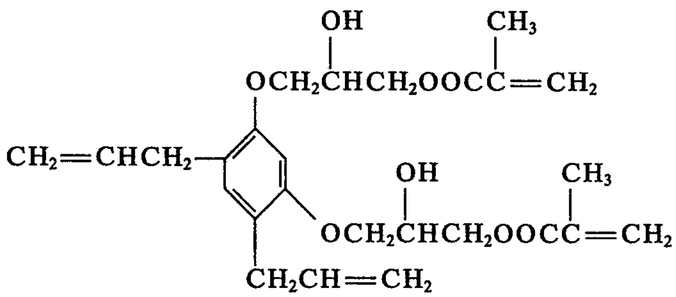

(XLI)

ergibt.

Herstellung eines vorverlängerten Harzes (»Harz A«)

1,3-Diglycidyl-5,5-dimethylhydantion (100 g) wird durch 6 Stunden Erhitzen mit 94,75 g 2,2-Bis-(3-allyl-4-hydroxyphenyl)-propan in 195 g 0,6 g Tetramethylammoniumchlorid enthaltendem Cyclohexanon bei 120° vorverlängert. Nach Ablauf der 6 Stunden ist der Epoxidgehalt des Gemischs auf 1,0 val/kg gefallen. Das Zwischenprodukt entspricht im wesentlichen der Formel XLII, worin X und Y je eine Glycidylgruppe und x eine positive ganze Zahl darstellen. Nach Abkühlen des Gemischs auf 80° versetzt man mit 0,4 g 2,6-Di-tert.-butyl-p-kresol und danach tropfenweise im Verlauf von 20 Minuten mit 17,2 g Methacrylsäure. Dann erhitzt man 6 Stunden bei 100° und unterbricht die Reaktion auf dieser Stufe, wenn der Epoxidgehalt des Harzes auf 0,29 val/kg gefallen ist. Das Produkt »Harz A« ist im wesentlichen ein Gemisch der Formel XLII.

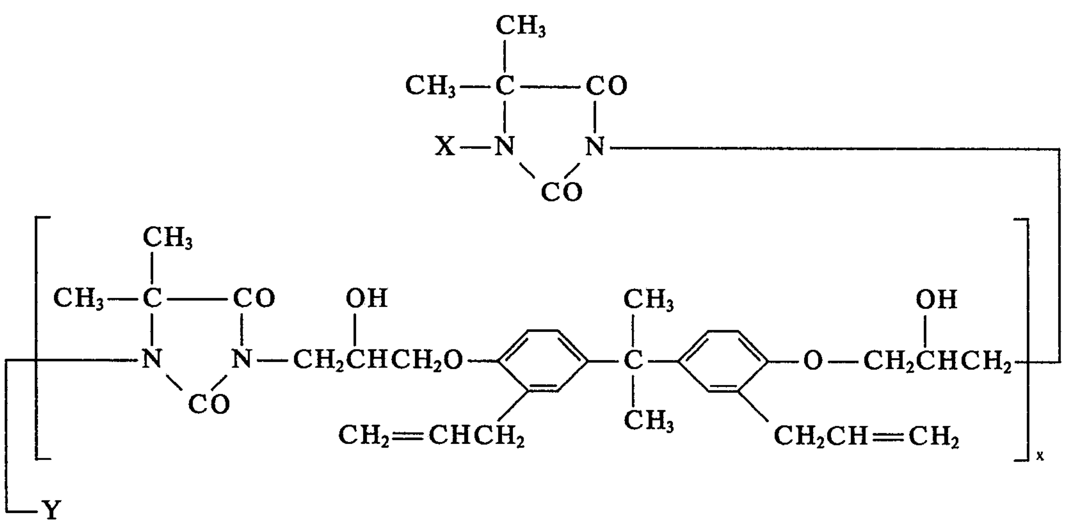

(XLII)

worin ein Teil der Gruppen X und Y 3-(methacryloyloxy)-2-hydroxypropylgruppen und die restlichen X und Y Glycidylgruppen bezeichnen.

Herstellung von Benzophenon-3,4,3',4'-tetracarbonsäure-X,X'-diallylester-Y,Y'-bis-(3-(methacryloyloxy)-2-hydroxypropyl)-estern

Man erhitzt Benzophenon-3,4,3',4'-tetracarbonsäure-dianhydrid (400 g; aus Essigsäureanhydrid umkristallisiert) und 1200 g Allylalkohol 1 Stunde zum Rückfluß und entfernt dann den überschüssigen Allylalkohol durch Vakuumdestillation, wobei 540 g von Benzophenon-3,4,3',4'-tetracarbonsäure-X,X'-diallylestern zurückbleiben.

Man löst diese Diallylester (450 g) in 1200 g Epichlorhydrin, erhitzt auf 95°, versetzt mit einer Lösung von 2,05 g Tetramethylammoniumchlorid in 2,05 ml Wasser und rührt das Ganze 3 Stunden bei 95°. Das Gemisch wird auf 55° bis 60° abgekühlt und eine weitere Menge Tetramethylammoniumchlorid (1,71 g), in 1,71 ml Wasser gelöst, dazugegeben. In einer Apparatur zur laufenden Entfernung von Wasser wird das Gemisch in einem Teilvakuum bei 55° bis 57° zum Rückfluß gebracht. Unter Rühren versetzt man im Verlauf von 2½ Stunden tropfenweise mit 50%iger wäßriger Natronlauge (180 g) und rührt noch 1½ Stunden weiter. Man kühlt ab, hebt das Vakuum auf, gibt dann Wasser (340 ml) dazu, scheidet das Gemisch und wäscht die organische Schicht zuerst mit einer 5%igen wäßrigen Natriumdihydrogenorthophosphatlösung (223 ml) und dann mit 223 ml Wasser. Überschüssiges Epichlorhydrin wird bei vermindertem Druck abdestilliert, wobei 450 g Benzophenon-3,4,3',4'-tetracarbonsäure-X,X'-diallylester-Y,Y'-diglycidylester als viskoses Öl mit einem Epoxidgehalt von 3,1 val/kg zurückbleiben.

Die Diallylester-diglycidylester (200 g) werden in Gegenwart von 0,6 g Tetramethylammoniumchlorid und 0,4 g 2,6-Di-tert.-butyl-p-kresol auf 120° erhitzt und im Verlauf von 35 Minuten tropfenweise mit Methacrylsäure (52,6 g) versetzt. Man rührt noch 35 Minuten weiter und läßt das Gemisch dann abkühlen. Das gewünschte Produkt (d.h. ein solches der Formel XIX, worin eins von $R^7$ und $R^8$ und eins von $R^9$ und $R^{10}$ je eine Allylgruppe und die beiden verbleibenden Symbole $R^7$ bis $R^{10}$ jeweils eine Gruppe der Formel XX bedeuten, wobei R für eine Methylgruppe und $R^6$ für eine Gruppe der Formel I stehen) ist ein hellgelbes, viskoses Öl.

Die eingesetzten Polymercaptane sind handelsübliche Materialien mit den folgenden Thiolgehalten:

| Polymercaptan | SH-Äquivalent/kg |
|---|---|
| Pentaerythrit-tetrahioglykolat | 8,8 |
| 1,8-Dimercapto-3,6-dioxa-octan | 10,6 |
| Trimethylolpropan-trithioglykolat | 8,0 |
| Äthylenglykol-dithioglykolat | 9,05 |

Beispiel 1

Man vermischt gemäß Arbeitsweise I hergestelltes 2,2-Bis-(3-allyl-4-(3-methacryloyloxy)-2-hydroxypropoxy)-phenyl)-propan (78 Teile) mit 30 Teilen Pentaerythrittetrathioglykolat (d.h. 1 Mercaptangruppenäquivalent pro Allylgruppe) und 3 Teilen Benzildimethylacetal. Ein 10 μm dicker Film dieser Zusammensetzung wird auf Weißblech aufgezogen und in 8 cm Abstand mit der Strahlung einer Mitteldruckquecksilberbogenlampe (80 W pro cm) belichtet. Nach 2 Sekunden Belichtung erhält man einen zähen Film, der einem Normtest auf Lösungsmittelbeständigkeit widersteht, d.h. zwanzigmaliges Reiben mit einem mit Aceton getränkten Wattebausch hat keinen Einfluß.

Mit gemäß Arbeitsweise II hergestellten 2,2-Bis-(3-allyl-4-(3-(methacryloyloxy)-2-hydroxypropoxy)-phenyl)-propan erhält man die gleichen Ergebnisse.

Beispiel 2

Ein weiterer Anteil der in Beispiel 1 hergestellten Zusammensetzung wird als 10 μm tiefe Schicht auf eine 1 mm dicke Glasplatte aufgebracht. Man legt eine weitere Glasplatte über die erste und belichtet den Aufbau in 8 cm Abstand 5 Sekunden mit der Strahlung derselben Lampe wie in Beispiel 1 verwendet. Die Glasplatten sind fest miteinander verbunden, sogar nach 2 Stunden Eintauchen in siedendes Wasser.

Beispiel 3

Man vermischt gemäß Arbeitsweise II hergestelltes 2,2-Bis-(3-allyl-4-(3-(methacryloyloxy)-2-hydroxypropoxy)-phenyl)-propan (17 Teile) mit 5,4 Teilen 3,6-Dioxa-1,8-dimercapto-octan (d. h. 1 Mercaptangruppenäquivalent pro Allylgruppe) und 0,75 Teil Benzildimethylacetal. Eine 10 µm dicke Schicht dieser Zusammensetzung wird auf Weißblech aufgezogen und wie in Beispiel 1 bestrahlt. Nach 2 Sekunden Bestrahlung erhält man einen klebefreien, lösungsmittelbeständigen Film.

Beispiel 4

Man stellt eine Zusammensetzung wie in Beispiel 3 her, jedoch unter Ersatz des 3,6-Dioxa-1,8-dimercaptooctans durch 7 Teile Trimethylolpropan-trithioglykolat (d. h. 1 Mercaptangruppenäquivalent pro Allylgruppe), und bestrahlt die Schicht 4 Sekunden lang. Man erhält einen glänzenden, lösungsmittelbeständigen Film.

Beispiel 5

Man bringt Anteile der in Beispielen 1, 3 und 4 hergestellten Zusammensetzungen auf mit Trichloräthylen entfettete und in Chromsäurelösung gebeizte Streifen Aluminiumfolie auf (Aluminiumlegierung Alclad 3L73: »Alclad« ist ein eingetragenes Warenzeichen). Dünne Glasplatten werden mit einer 5%igen Lösung von 3-(Glycidyloxy)-propyltrimethoxysilan in einem Gemisch aus denaturiertem Spiritus und Wasser im Volumenverhältnis 9 : 1 grundiert und über die Zusammensetzungen gelegt, und die Aufbauten werden dann 5 Sekunden mit der Strahlung einer Mitteldruckquecksilberlampe (80 W pro cm) belichtet. In jedem Fall werden die Glasplatten dabei fest mit dem Aluminiumstreifen verbunden.

Beispiel 6

Man bringt ein Gemisch von 2,2-Bis-(3-allyl-4-(methacryloyloxy)-phenyl)-propan (100 Teile), Pentaerythrit-tetrathioglykolat (51 Teile, d. h. 1 Mercaptangruppenäquivalent pro Allylgruppe) und 4,5 Teile Benzildimethylacetal als Film von ... µm Dicke auf Weißblech auf. Nach 15 Sekunden Bestrahlen wie in Beispiel 1 erhält man einen zähen, lösungsmittelbeständigen Film.

Beispiel 7

Man bringt ein aus 85 Teilen 2,2-Bis-(3-allyl-4-(3-(methacryloyloxy)-2-hydroxypropoxy)-phenyl)-propan (gemäß Arbeitsweise II hergestellt), 32,7 Teilen Pentaerythrit-tetrathioglykolat (d. h. 1 Mercaptangruppenäquivalent pro Allylgruppe) und 3,5 Teilen 2,2'-Azobis-(2-methylpropionitril) bestehendes Gemisch bei Raumtemperatur als Überzug auf eine Polyamidträgerfolie auf. Der Film wird zwischen zwei mit Trichloräthylen entfettete und in Chromsäurelösung gebeizte Platten aus Aluminiumlegierung »Alclad 3L73« eingelegt. Überlappungsverbindungen (1,27 cm) werden dadurch hergestellt, daß man den Aufbau 5 Minuten auf 90° erhitzt und dann 1 Stunde bei 120° unter einem Druck von 0,34 $MN/m^2$ verpreßt. Die Überlappungsscherfestigkeit der Verbindungen bei Raumtemperatur beträgt 8,2 $MN/m^2$.

Beispiel 8

Man wiederholt die Arbeitsweise des Beispiels 7 unter Verwendung eines Gemischs aus 100 Teilen 2,2-Bis-(3-allyl-4-(3-(methacryloyloxy)-2-hydroxypropoxy)-phenyl)-propan (gemäß Arbeitsweise II hergestellt), 42 Teilen Trimethylolpropan-trithioglykolat (d. h. 1 Mercaptangruppenäquivalent pro Allylgruppe) und 4,5 Teilen 2,2'-Azobis-(2-methylpropionitril). Die Überlappungsscherfestigkeit der Verbindungen bei Raumtemperatur beträgt 19,4 $MN/m^2$.

Beispiel 9

Eine aus 100 Teilen eines wie oben beschrieben hergestellten Gemischs von 1-Allyloxycarbonyl-2,4-bis-(3-(methacryloyloxy)-2-hydroxypropoxycarbonyl)-benzol und 1-Allyloxycarbonyl-2,5-bis-(3-(methacryloyloxy)-2-hydroxypropoxycarbonyl)-benzol, 21 Teilen Pentaerythrit-tetrathioglykolat (d. h. 1 Mercaptangruppenäquivalent pro Allylgruppe) und 3,5 Teilen Benzildimethylacetal bestehende Zusammensetzung wird in Form eines 10 µm dicken Films bestrahlt, wie in Beispiel 1 beschrieben. Nach 5 Sekunden Bestrahlung entsteht ein lösungsmittelbeständiger Film.

Beispiel 10

Glastuch (in Leinwandbindung) wird mit einer aus 26 Teilen 2,2-Bis-(3-allyl-4-(3-(methacryloyloxy)-2-hydroxypropoxy)-phenyl)-propan (gemäß Arbeitsweise II hergestellt), 10 Teilen Pentaerythrit-tetrathioglykolat (d. h. 1 Mercaptangruppenäquivalent pro Allylgruppe), einem Teil Benzophenon und 1 Teil 2,2'-Azobis-(2-methylpropionitril) bestehenden Zusammensetzung imprägniert. Man belichtet das imprägnierte Tuch auf beiden Seiten 1 Sekunde in 8 cm Abstand mit der Strahlung einer Mitteldruckquecksilberbogenlampe (80 W pro cm). Durch 1 Stunde Verpressen von 16-cm-quadratischen Stücken des Prepregs bei 120° unter einem Druck von 2,1 $MN/m^2$ wird ein Sechsfachschichtkörper hergestellt. Der 57% Glas enthaltende Schichtkörper besitzt eine Biegefestigkeit von 354 $MN/m^2$ bei Raumtemperatur.

Beispiel 11

Man bringt eine flüssige, aus 100 Teilen 2,2-Bis-(3-allyl-4-(3-(methacryloyloxy)-2-hydroxypropoxy)-phenyl)-propan (gemäß Arbeitsweise II hergestellt), 42 Teilen Trimethylolpropan-trithioglykolat (d. h. 1 Mercaptangruppenäquivalent pro Allylgruppe), 4,5 Teilen Benzildimethylacetal und 4,5 Teilen 2,2'-Azobis-(2-methylpropionitril) bestehende Zusammensetzung bei Raumtemperatur als Überzug auf eine Polyamidträgerfolie auf. 1 Sekunde Bestrahlung in 1 cm Abstand unter einer Mitteldruckquecksilberbogenlampe (80 W pro cm) führt zur Bildung einer klebefreien Folie. Diese wird zugeschnitten und zwischen zwei in Trichloräthylen entfettete und in Chromsäurelösung gebeizte Platten aus Aluminiumlegierung eingelegt. Überlappungsverbindungen (1,27 cm) werden dadurch hergestellt, daß man den Aufbau 1 Stunde bei 120° unter einem Druck von 0,34 $MN/m^2$ verpreßt. Die Überlappungsscherfestigkeit der Verbindungen bei Raumtemperatur beträgt 6,7 $MN/m^2$.

Beispiel 12

Man bringt ein Gemisch aus 2,2-Bis-(3,5-diallyl-4-(3-(methacryloyloxy)-2-hydroxypropoxy)-phenyl)-propan (10 Teile), Pentaerythrit-tetrathioglykolat (8,6 Teile, d. h. 1 Mercaptangruppenäquivalent pro Allylgruppe) und Benzildimethylacetal (0,5 Teil) als 10 μm dicken Film auf Weißblech auf und belichtet mit Strahlung wie in Beispiel 1. Nach 5 Sekunden Bestrahlung erhält man einen klebefreien, lösungsmittelbeständigen Film.

Beispiel 13

Eine heißhärtbare, aus 2,2-Bis-(3,5-diallyl-4-(3-(methacryloyloxy)-2-hydroxypropoxy)-phenyl)-propan (50 Teile), Pentaerythrit-tetrathioglykolat (43 Teile, d. h. 1 Mercaptangruppenäquivalent pro Allylgruppe) und 2,2'-Azobis-(2-methylpropionitril) (2,8 Teile) bestehende Zusammensetzung wird zur Herstellung von Überlappungsverbindungen wie in Beispiel 7 beschrieben verwendet. Die Überlappungsscherfestigkeit der Verbindungen bei Raumtemperatur beträgt 24,7 $MN/m^2$.

Beispiel 14

Zu einer wie in Beispiel 13 beschrieben hergestellten Zusammensetzung gibt man 2,8 Teile Benzildimethylacetal und stellt wie in Beispiel 11 beschrieben Überlappungsverbindungen her. Die Überlappungsscherfestigkeit der Verbindungen bei Raumtemperatur beträgt 17,9 $MN/m^2$.

Beispiel 15

Eine aus 26 Teilen 2,2-Bis-(3-(1-propenyl)-4-(3-(methacryloyloxy)-2-hydroxypropoxy)-phenyl)-propan, 10 Teilen Pentaerythrit-tetrathioglykolat (d.h. 1 Mercaptangruppenäquivalent pro Propenylgruppe) und 1 Teil Benzildimethylacetal bestehende Zusammensetzung wird wie in Beispiel 1 beschrieben als 10 μm dicker Film auf Weißblech bestrahlt, wobei man nach 5 Sekunden Bestrahlung einen lösungsmittelbeständigen, klebefreien Film erhält.

Beispiel 16

Eine aus 52 Teilen 2,2-Bis-(3-(1-propenyl)-4-(3-(methacryloyloxy)-2-hydroxypropoxy)-phenyl)-propan, 20 Teilen Pentaerythrit-tetrathioglykolat (d.h. 1 Mercaptangruppenäquivalent pro Propenylgruppe) und 2,2 Teilen 2,2'-Azobis-(2-methylpropionitril) bestehende Zusammensetzung wird dazu verwendet, wie in Beispiel 7 Überlappungsverbindungen herzustellen. Die Überlappungsscherfestigkeit der Verbindungen beträgt 11,5 $MN/m^2$.

Beispiel 17

Eine aus 10 Teilen gemischtem 1,3-Diallyl-2,4-bis-(3-(methacryloyloxy)-2-hydroxypropoxy)-benzol und 1,5-Diallyl-2,4-bis-(3-(methacryloyloxy)-2-hydroxypropoxy)-benzol, 6,8 Teilen Pentaerythrit-tetrathioglykolat (d.h. 1 Mercaptangruppenäquivalent pro Allylgruppe) und 0,6 Teile Benzildimethylacetal bestehende Zusammensetzung wird auf Weißblech aufgebracht und wie in Beispiel 1 beschrieben bestrahlt. Nach 5 Sekunden Bestrahlung erhält man einen lösungsmittelbeständigen Überzug.

Der Versuch wird wiederholt, unter Verwendung von 6,65 Teilen (d.h. 1 Mercaptangruppenäquivalent pro Allylgruppe) Äthylenglykoldithioglykolat anstelle des Pentaerythrit-tetrathioglykolats. Man erhält ähnliche Ergebnisse.

Beispiel 18

Man bringt eine aus 20 Teilen Harz A, 3,3 Teilen Pentaerythrit-tetrathioglykolat und 0,39 Teilen Benzildimethylacetal bestehende Zusammensetzung als Überzug auf einen kupferkaschierten Schichtkörper auf und läßt das Lösungsmittel verdunsten, wobei ein 10 µm dicker Film zurückbleibt. Dieser Film wird 10 Minuten unter einem Negativ in 22 cm Abstand unter Verwendung einer 500 W-Mitteldruckquecksilberbogenlampe bestrahlt. Nach der Bestrahlung wird die Abbildung in einem Gemisch aus 10 Volumenteilen Aceton und 90 Volumenteilen Xylol entwickelt, und die unbelichteten Stellen werden ausgewaschen, wobei eine gute Reliefabbildung auf dem Kupfer verbleibt. Die unbeschichteten Kupferstellen werden dann mit einer wäßrigen Eisen-III-chloridlösung (41% $FeCl_3$) bei 35° geätzt, wobei die beschichteten Stellen unberührt bleiben.

Beispiel 19

Man vermischt Benzophenon-3,4,3',4'-tetracarbonsäure-X,X'-diallylester-Y,Y'-bis-(3-methacryloyloxy)-2-hydroxypropylester (32,5 Teile) mit 11,5 Teilen Pentaerythrit-tetrathioglykolat (d.h. 1 Mercaptangruppenäquivalent pro Allylgruppe). Ein 10 µm dicker Film dieser Zusammensetzung wird auf Weißblech aufgezogen und in 8 cm Abstand mit der Strahlung einer Mitteldruckquecksilberbogenlampe (80 W pro cm) belichtet. Nach 4 Sekunden Belichtung erhält man einen zähen Film, der einem Normtest auf Lösungsmittelbeständigkeit widersteht, d.h. zwanzigmaliges Reiben mit einem in Aceton getränkten Wattebausch hat keinen Einfluß.

Beispiel 20

Man widerholt die Arbeitsweise des Beispiels 19, unter Verwendung von 100 Teilen der Diallyldimethacryloylverbindungen und 35 Teilen Trimethyloylpropan-trithioglykolat (d.h. 1 Mercaptangruppenäquivalent pro Allylgruppe). Nach nur zwei Sekunden Bestrahlung wird ein klebefreier, lösungsmittelbeständiger Film erzeugt.

Beispiel 21

Man wiederholt die Arbeitsweise des Beispiels 19, unter Verwendung von 100 Teilen der Diallyldimethacryloylverbindungen und 26 Teilen 1,8-Dimercapto-3,6-dioxa-octan (d.h. ein Mercaptangruppenäquivalent pro Allylgruppe). Nach fünf Sekunden Belichtung erhält man einen klebefreien, lösungsmittelbeständigen Film.

Beispiel 22

Ein weiterer Anteil der in Beispiel 19 hergestellten Zusammensetzung wird als 10 µm tiefe Schicht auf eine 1 mm dicke Glasplatte aufgebracht. Man legt eine weitere Glasplatte über die erste und belichtet den Aufbau 5 Sekunden in 8 cm Abstand mit der Strahlung der gleichen Lampe wie in Beispiel 1 verwendet. Die Glasplatten sind fest miteinander verbunden.

Beispiel 23

Man bringt Anteile der in den Beispielen 19 und 20 hergestellten Zusammensetzungen auf in Trichloräthylen entfettete und in Chromsäurelösung gebeizte Streifen aus Aluminiumfolie auf (Aluminiumlegierung Alclad 3L73: »Alclad« ist ein eingetragenes Warenzeichen). Dünne Glasplatten werden mit einer 5%igen Lösung von 3-(Glycidyloxy)-propyltrimethoxysilan in einem Gemisch aus denaturiertem Spiritus und Wasser im Volumenverhältnis 9:1 grundiert und über die Zusammensetzungen gelegt, und die Aufbauten werden dann 5 Sekunden mit der Strahlung einer Mitteldruckquecksilberlampe (80 W pro cm) belichtet. In jedem Fall werden die Glasplatten fest mit dem Aluminiumstreifen verbunden.

**Patentansprüche**

1. Polymerisierbare Zusammensetzungen, gekennzeichnet durch

a) eine Verbindung, die im Molekül sowohl
   i) mindestens eine unter Acryloyloxy- und Methacryloyloxygruppen ausgewählte Gruppe als auch
   ii) mindestens eine unter Allyl-, Methallyl- und 1-Propenylgruppen ausgewählte Gruppe enthält, die jeweils direkt an ein zu einem aromatischen Kern gehöriges Kohlenstoffatom gebunden sind oder an ein Sauerstoffatom oder eine Oxycarbonylgruppe, die ihrerseits direkt an ein solches Kohlenstoffatom gebunden sind, wobei die Summe dieser Gruppen i) und ii) mindestens drei beträgt, und
b) eine Verbindung, die pro Molekül mindestens zwei direkt an aliphatische Kohlenstoffatome gebundene Mercaptangruppen in einem solchen Verhältnis enthält, daß mindestens 0,8 einer solchen Mercaptangruppe auf eine unter Allyl-, Methallyl- und 1-Propenylgruppen ausgewählte Gruppe in a), jedoch weniger als 1,0 einer solchen Mercaptangruppe auf eine unter Acryloyl-, Methacryloyl-, Allyl-, Methallyl- und 1-Propenylgruppen ausgewählte Gruppe in a) kommt.

2. Zusammensetzungen nach Anspruch 1, dadurch gekennzeichnet, daß diese bzw. jede dieser Acryloyloxy- oder Methacryloyloxygruppe(n) direkt oder über das (endständige) Äthersauerstoffatom einer Gruppe der Formel

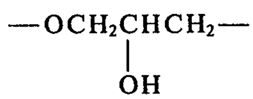 (I)

oder

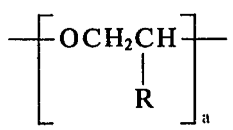 (II)

worin R ein Wasserstoffatom oder eine Methylgruppe bedeutet und a eine ganze Zahl von 1 bis 6 ist, an ein Kohlenstoffatom eines aromatischen Kerns gebunden ist bzw. sind.

3. Zusammensetzungen nach Anspruch 1, dadurch gekennzeichnet, daß die Komponente a) im Molekül mindestens zwei und höchstens sechs unter Acryloyloxy- und Methacryloyloxygruppen ausgewählte Gruppen enthält.

4. Zusammensetzungen nach Anspruch 1, dadurch gekennzeichnet, daß die Komponente a) im Molekül mindestens zwei und höchstens fünfzehn unter Allyl-, Methallyl- und 1-Propenylgruppen ausgewählte Gruppen enthält.

5. Zusammensetzungen nach Anspruch 4, dadurch gekennzeichnet, daß die Komponente a) ein mehrwertiges Phenol ist, in dem mindestens zwei phenolische Hydroxylgruppen entweder direkt oder über das (endständige) Äthersauerstoffatom einer Gruppe der in Anspruch 2 bezeichneten Formel I oder II mit unter Acrylyol- und Methacryloylgruppen ausgewählten Gruppen verestert sind und in dem entweder mindestens zwei phenolische Hydroxylgruppen direkt mit unter Allyl-, Methallyl- und 1-Propenylgruppen ausgewählten Gruppen veräthert sind oder wobei dieses mehrwertige Phenol direkt an Kohlenstoffatomen in dessen Benzol- oder Naphthalinkern bzw. -kernen durch mindestens zwei unter Allyl-, Methallyl- und 1-Propenylgruppen ausgewählte Gruppen substituiert sind.

6. Zusammensetzungen nach Anspruch 1, dadurch gekennzeichnet, daß die Komponente a) unter Verbindungen der Formeln

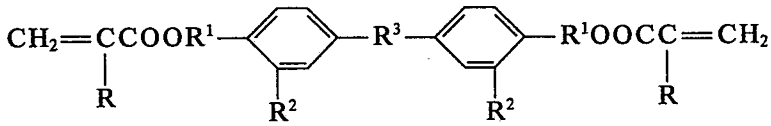

(III)

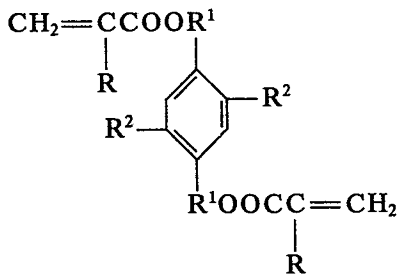

(IV)

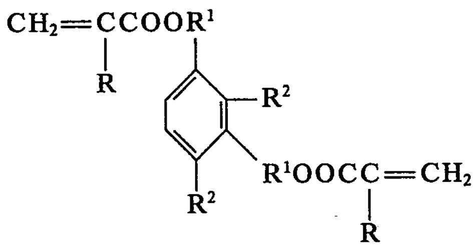

(V)

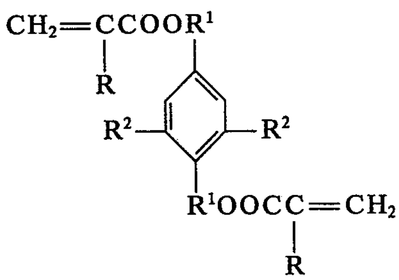

(VI)

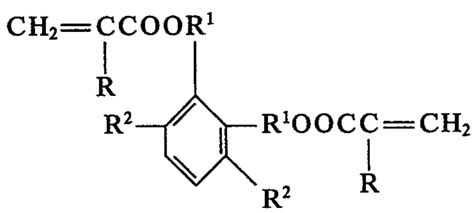

(VII)

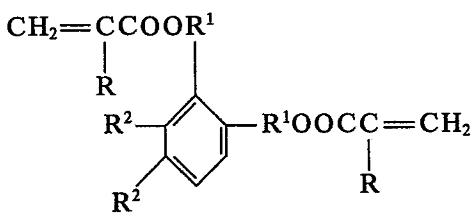

(VIII)

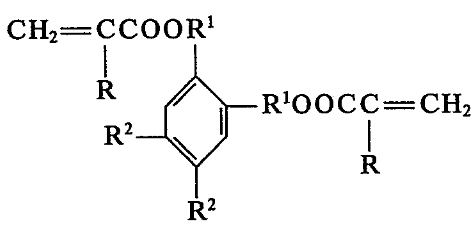

(IX)

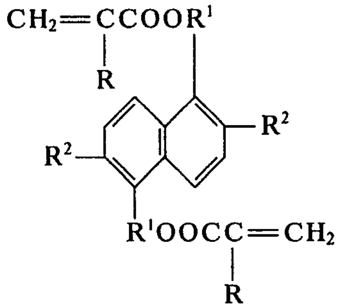

(X)

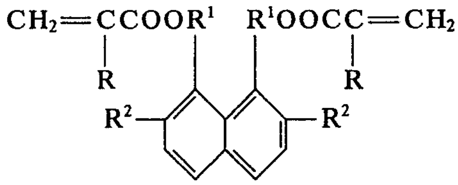

(XI)

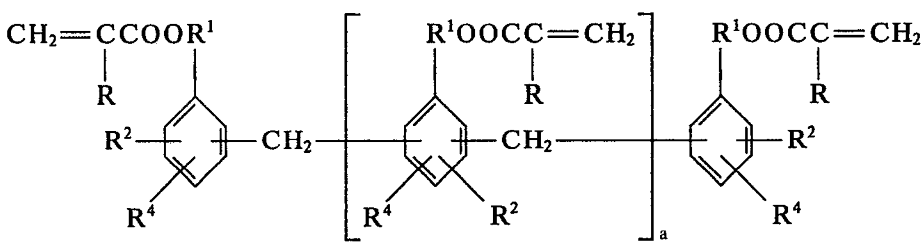

(XII)

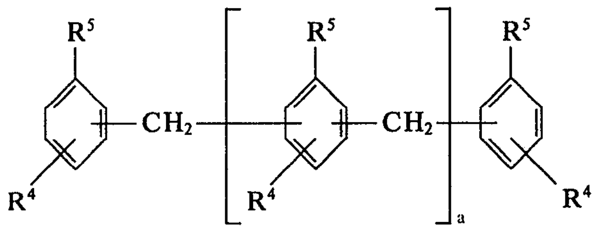

(XIII)

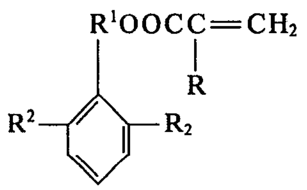

(XIV)

und

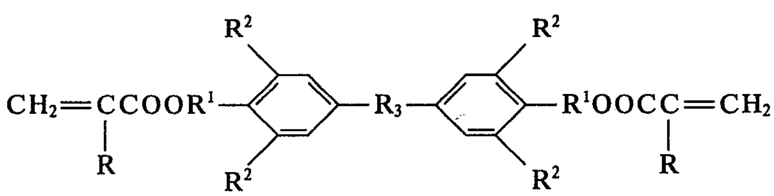

(XV)

worin R und a die in Anspruch 2 bezeichnete Bedeutung haben, die $R^1$ jeweils eine Sauerstoff-Kohlenstoffbindung oder eine Gruppe der in Anspruch 2 definierten Formel I oder II bedeuten, die $R^2$ jeweils eine Allyl-, Methallyl- oder 1-Propenylgruppe darstellen, $R^3$ für eine Kohlenstoff-Kohlenstoffbindung, eine Alkylen- oder Alkylidengruppe mit bis zu 5 Kohlenstoffatomen, ein Äthersauerstoffatom, ein Schwefelatom oder eine Gruppe der Formel $-CO-$, $-SS-$, $-SO-$ oder $-SO_2-$ steht, die $R^4$ jeweils ein Wasserstoff-, Chlor- oder Bromatom oder eine Alkylgruppe mit 1 bis 4 Kohlenstoffatomen bedeuten und die $R^5$ jeweils eine Gruppe der Formel $CH_2{=}C(R)COOR^1-$ oder eine Allyloxy-, Methallyloxy- oder 1-Popenyloxygruppe darstellen, wobei mindestens ein $R^5$ eine solche Gruppe der Formel $CH_2{=}C(R)COOR^1-$ und mindestens zwei $R^5$ je eine Allyloxy-, Methallyloxy- oder 1-Propenyloxygruppe sind, mit der Maßgabe, daß sich jede in den Formeln XII und XIII gezeigte $-CH_2-$ und $R^2$-Gruppe in ortho- oder para-Stellung zu einer abgebildeten Gruppe $CH_2{=}C(R)COOR^1-$ und $R^5-$ befindet, ausgewählt wird.

7. Zusammensetzungen nach Anspruch 3, dadurch gekennzeichnet, daß die Komponente a) der Formel

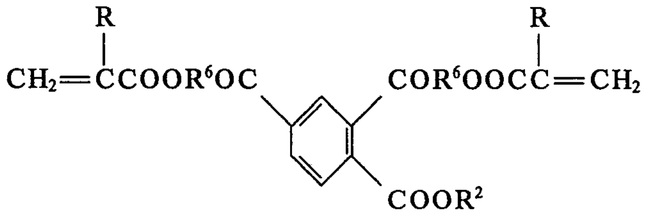

(XVI)

oder

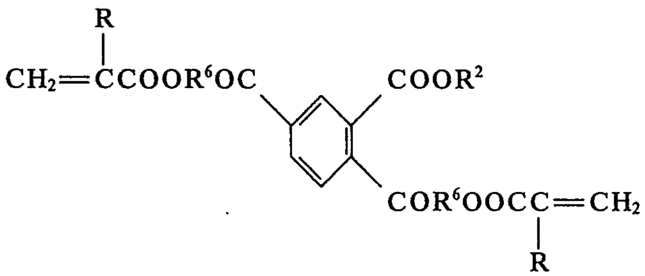

(XVII)

worin die $R^6$ jeweils eine Gruppe der in Anspruch 2 definierten Formel I oder II bedeuten, entspricht.

8. Zusammensetzungen nach Anspruch 3, dadurch gekennzeichnet, daß die Komponente a) der Formel

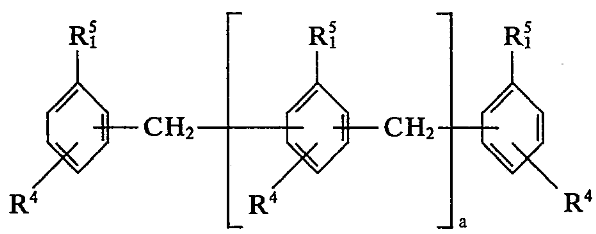

(XVIII)

worin die $R_1^5$ jeweils eine Gruppe der Formel $CH_2{=}C(R)COOR^1-$ oder eine Allyloxy-, Methallyloxy- oder 1-Propenyloxygruppe darstellen, wobei mindestens zwei $R_1^5$ eine solche Gruppe der Formel $CH_2{=}C(R)COOR^1-$ und ein $R_1^5$ eine Allyloxy-, Methallyloxy- oder 1-Propenyloxygruppe bedeuten und wobei sich die $-CH_2$-Gruppen in ortho- oder para-Stellung zu einer Gruppe $R_1^5$ befinden, R und a die in Anspruch 2 sowie $R^1$ und $R^4$ die in Anspruch 6 angegebenen Bedeutungen haben, entspricht.

9. Zusammensetzungen nach Anspruch 1, dadurch gekennzeichnet, daß die Komponente a) der Formel

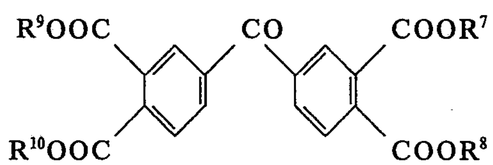

(XIX)

worin eins von $R^7$ und $R^8$ und eins von $R^9$ und $R^{10}$ dieselbe Bedeutung haben und je eine Allyl- oder Methallylgruppe darstellen und die verbleibenden Symbole $R^7$ und $R^8$ bzw. $R^9$ und $R^{10}$ jeweils den Rest eines Alkohols nach Wegnahme einer alkoholischen Hydroxylgruppe darstellen, wobei dieser Rest eine Acryloyloxy- oder Methacryloyloxygruppe enthält, entspricht.

10. Zusammensetzungen nach Anspruch 9, dadurch gekennzeichnet, daß die Acryloyloxygruppe als Acryloylalkenoxy- oder Acryloyloxy-hydroxyalkenoxygruppe und die Methacryloyloxygruppe als Methacryloylalkenoxy- oder Methacryloyloxyhydroxyalkenoxygruppe vorliegen.

11. Zusammensetzungen nach Anspruch 10, dadurch gekennzeichnet, daß die verbleibenden Symbole $R^7$ und $R^8$ bzw. $R^9$ und $R^{10}$ jeweils eine Gruppe der Formel

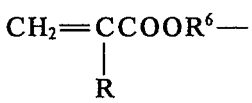

(XX)

worin R die in Anspruch 2 und $R^6$ die in Anspruch 7 angegebenen Bedeutungen haben, darstellen.

12. Zusammensetzungen nach Anspruch 1, dadurch gekennzeichnet, daß als Komponente b) ein Ester einer Monomercaptoalkylencarbonsäure mit einem mehrwertigen Alkohol oder eines aliphatischen einwertigen Monomercaptoalkohols mit einer Polycarbonsäure vorliegt.

13. Zusammensetzungen nach Anspruch 1, dadurch gekennzeichnet, daß die Komponente b) der Formel

$$R^{17}\!-\!\left[(O)_d-CO(O)_e-R^{15}(O)_e-CO(O)_d-R^{16}SH\right]_f \qquad (XXV)$$

worin d und e je null oder 1 aber verschieden sind, f eine ganze Zahl von 1 bis 6 ist, $R^{15}$ einen zweiwertigen organischen Rest darstellt, der über eines oder mehrere seiner Kohlenstoffatome an die bezeichneten –O- oder –CO-Einheiten gebunden ist, $R^{16}$ einen zweiwertigen organischen Rest bedeutet, der über eines oder mehrere seiner Kohlenstoffatome an die bezeichnete –SH-Gruppe und –O- oder –CO-Einheit gebunden ist, und $R^{17}$ für einen organischen Rest steht, der bei $f = 1$ mindestens eine aliphatische –SH-Gruppe enthalten muß und über eines bzw. mehrere seiner Kohlenstoffatome an die bezeichnete(n) –O- oder –CO-Einheit(en) gebunden ist, entspricht.

14. Zusammensetzungen nach Anspruch 1, dadurch gekennzeichnet, daß die Komponente b) der Formel

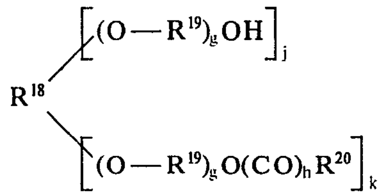

(XXVI)

worin $R^{18}$ den Rest eines mehrwertigen Alkohols nach Wegnahme von (j + k) alkoholischen Hydroxylgruppen darstellt, die $R^{19}$ jeweils eine Alkylengruppe mit einer Kette von mindestens 2 und höchstens 6 Kohlenstoffatomen zwischen den bezeichneten aufeinanderfolgenden Sauerstoffatomen bedeuten, $R^{20}$ für einen aliphatischen, mindestens eine Mercaptangruppe enthaltenden Rest mit 1 bis 6 Kohlenstoffatomen steht sowie g eine positive ganze Zahl, h null oder 1, j null oder eine solche positive ganze Zahl, daß (j + k) höchstens 6 beträgt, und k eine ganze Zahl von 2 bis 6 sind, entspricht.

15. Zusammensetzungen nach Anspruch 1, dadurch gekennzeichnet, daß als Komponente b) ein Sulfid mit Mercaptanendgruppen vorliegt, der allgemeinen Formel

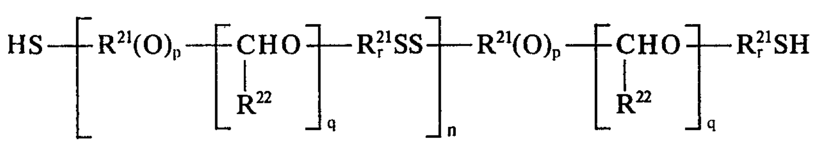

(XXIX)

worin die $R^{21}$ jeweils eine Alkylenkohlenwasserstoffgruppe mit 2 bis 4 Kohlenstoffatomen bedeuten, $R^{22}$ ein Wasserstoffatom oder eine Methyl- oder Äthylgruppe darstellt, n eine ganze Zahl mit einem Mittelwert von mindestens 1 ist und p entweder null, wobei q und r dann beide ebenfalls null sind, oder 1 ist, wobei q dann null oder 1 und r 1 sind.

16. Zusammensetzungen nach Anspruch 1, dadurch gekennzeichnet, daß als Komponente b) ein Polybutadien mit Mercaptanendgruppen vorliegt, der Formel

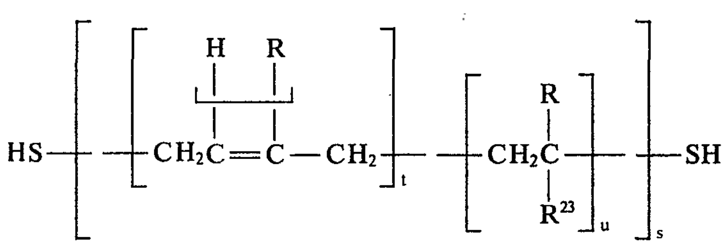

(XXX)

worin die R jeweils die in Anspruch 2 bezeichnete Bedeutung haben, $R^{23}$ für $-CN$, $-COOH$, $-CONH_2$, $-C_6H_5$ oder $-COOR^{24}$ steht, worin $R^{24}$ eine Alkylgruppe mit eins bis acht Kohlenstoffatomen bedeutet, sowie t eine ganze Zahl von mindestens eins, u null oder eine positive ganze Zahl und s eine ganze Zahl größer als eins sind.

17. Zusammensetzungen nach Anspruch 1, dadurch gekennzeichnet, daß als Komponente b) eine Oxyalkylenverbindung mit Mercaptanendgruppen vorliegt, der allgemeinen Formel

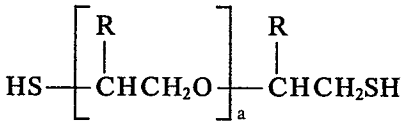

(XXXII)

worin die R sowie a jeweils die in Anspruch 2 bezeichnete Bedeutung haben.

18. Zusammensetzungen nach Anspruch 1, dadurch gekennzeichnet, daß die Komponente b) der allgemeinen Formel

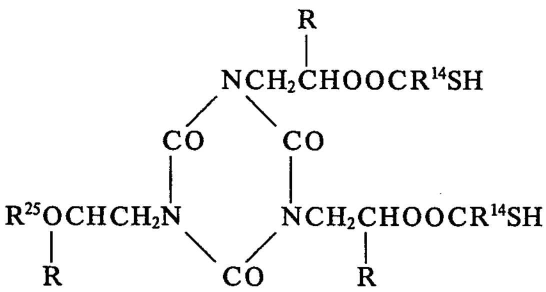

(XXXIII)

worin die R jeweils die in Anspruch 2 angegebene Bedeutung haben und die $R^{14}$ jeweils $-CH_2-$, $-(CH_2)_2-$ oder $-CH(CH_3)-$ und $R^{25}$ eine Gruppe $-OCR^{14}SH$ oder ein Wasserstoffatom darstellen, entspricht.

19. Verfahren zur Polymerisation von Zusammensetzungen nach Anspruch 1, dadurch gekennzeichnet, daß man diese mit aktinischer Strahlung belichtet, wenn nötig in Gegenwart eines Photoinitiators.

20. Verfahren nach Anspruch 19, dadurch gekennzeichnet, daß man die Zusammensetzung der Wirkung eines hitzeaktivierbaren Radikalkatalysators aussetzt.

21. Verfahren nach Anspruch 19 zur Polymerisation einer Zusammensetzung, die wenn nötig einen Photoinitiator sowie ferner einen hitzeaktivierbaren Radikalkatalysator enthält, dadurch gekennzeichnet, daß man sie durch Belichtung mit aktinischer Strahlung teilweise polymerisiert und dann zur Aktivierung des hitzeaktivierbaren Radikalkatalysators erhitzt.

**Claims**

1. A polymerisable composition comprising

a) a compound containing in the molecule both
   i) at least one group chosen from acryloyloxy and methacryloyloxy groups,
   ii) at least one group chosen from allyl, methallyl, and 1-propenyl groups, each of which is attached direct to a carbon atom which forms part of an aromatic nucleus or to an oxygen atom or an oxycarbonyl group which are in turn attached direct to such a carbon atom, the total of the said groups i) and ii) being at least three,

b) a compound containing, per molecule, at least two mercaptan groups attached direct to aliphatic carbon atoms, in a proportion such as to supply at least 0.8 such mercaptan group per group selected from allyl, methallyl, and 1-propenyl groups in a) but less than 1.0 such mercaptan group per group selected from acryloyl, methacryloyl, allyl, methallyl, and 1-propenyl groups in a).

2. A composition according to claim 1, in which the or each said acrylolyloxy or methacryloyloxy group is attached to a carbon atom of an aromatic nucleus, direct or through the (terminal) ether oxygen atom of a group of formula

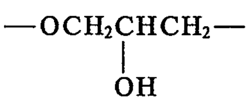

(I)

or

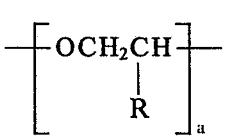

(II)

wherein R denotes a hydrogen atom or a methyl group and a is an integer from 1 to 6.

3. A composition according to claim 1, in which component a) contains at least two and at most six groups chosen from acryloyloxy and methacryloyloxy groups per molecule.

4. A composition according to claim 1, in which component a) contains at least two and at most fifteen groups chosen from allyl, methallyl, and 1-propenyl groups per molecule.

5. A composition according to claim 4, in which component a) is a polyhydric phenol, at least two phenolic hydroxyl groups of which are esterified with groups chosen from acryloyl and methacryloyl groups, either direct or through the (terminal) ether oxygen atom of a group of formula I or II as specified in claim 2, and either at least two phenolic hydroxyl groups of which are etherified direct with groups chosen from allyl, methallyl, and 1-propenyl groups, or said polyhydric phenol is substituted direct on carbon atoms in a benzene or naphthalene nucleus or nuclei thereof by at least two groups selected from allyl, methallyl and 1-propenyl groups.

6. A composition according to claim 1, in which component a) is selected from compounds of the formulae

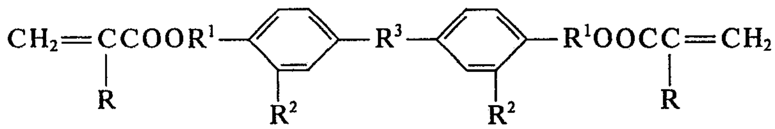

(III)

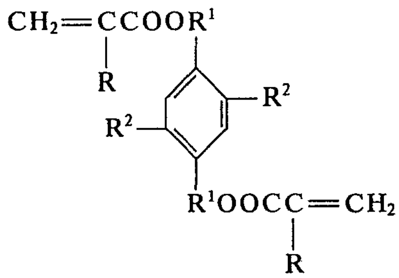

(IV)

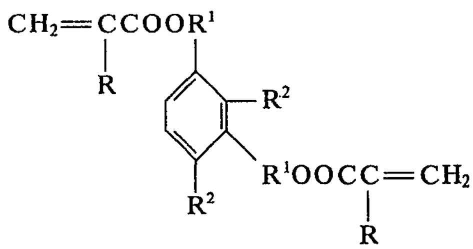

(V)

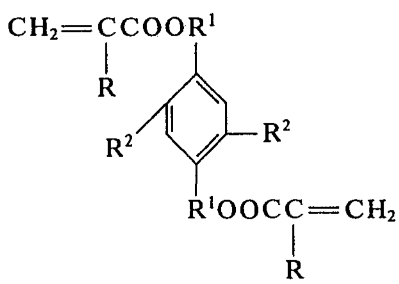

(VI)

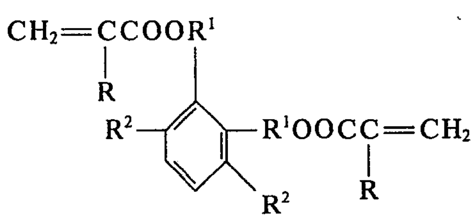

(VII)

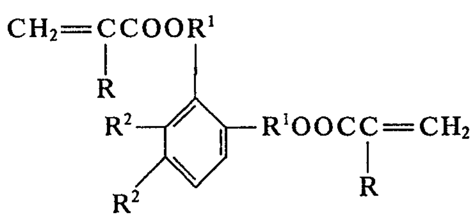

(VIII)

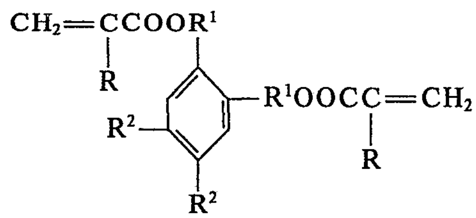

(IX)

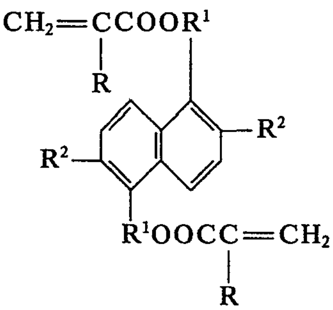

(X)

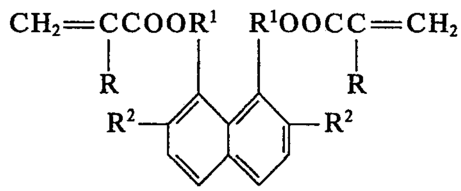

(XI)

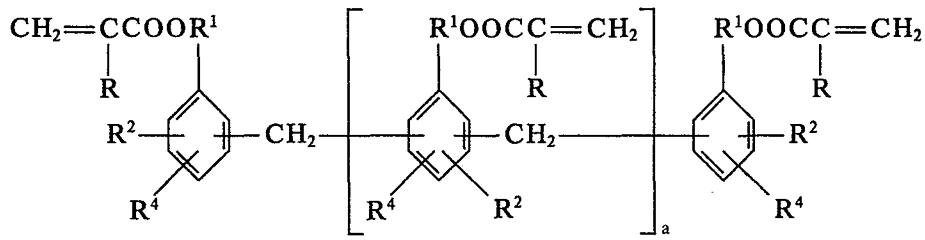

(XII)

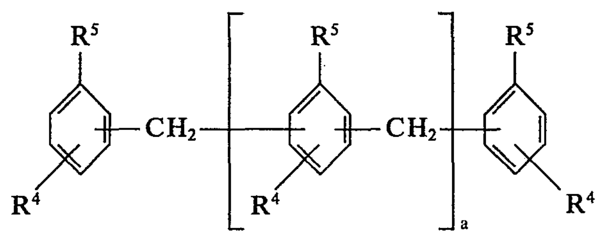

(XIII)

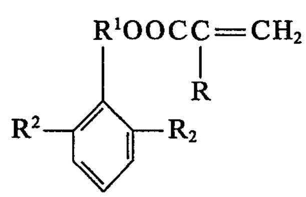

(XIV)

and

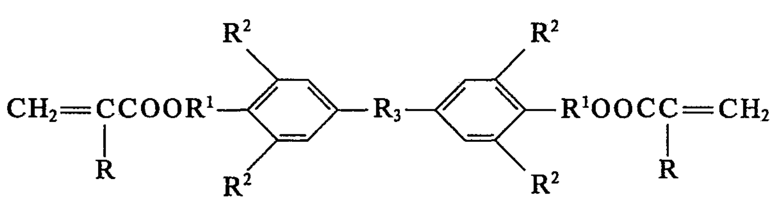

(XV)

wherein R and a are as defined in claim 2, each $R^1$ denotes an oxygen-carbon bond or a group of formula I or II as defined in claim 2, each $R^2$ denotes an allyl, methallyl, or 1-propenyl group, $R^3$ denotes

a carbon-carbon bond, an alkylene or alkylidene group of up to 5 carbon atoms, an ether oxygen atom, a sulphur atom, or a group of formula $-CO-$, $-SS-$, $-SO-$, or $-SO_2-$, each $R^4$ denotes a hydrogen, chlorine, or bromine atom, or an alkyl group of 1 to 4 carbon atoms, and each $R^5$ denotes a group of formula $CH_2{=}C(R)COOR^1-$ or an allyloxy, methallyloxy, or 1-propenyloxy group, with at least one group $R^5$ denoting a said group of formula $CH_2{=}C(R)COOR^1-$ and at least two groups $R^5$ each denoting an allyloxy, methallyloxy, or 1-propenyloxy group, with the proviso that, in furmulae XII and XIII, each $-CH_2-$ and $R^2$-group shown is ortho or para to an indicated group $CH_2{=}C(R)COOR^1-$ and $R^5-$.

7. A composition according to claim 3, in which component a) is of the formula

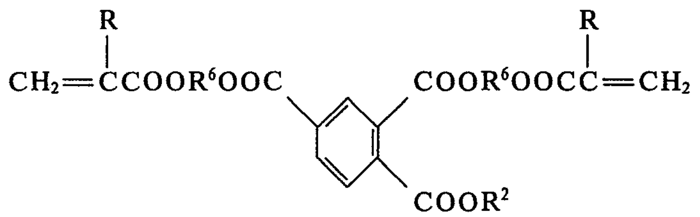

(XVI)

or

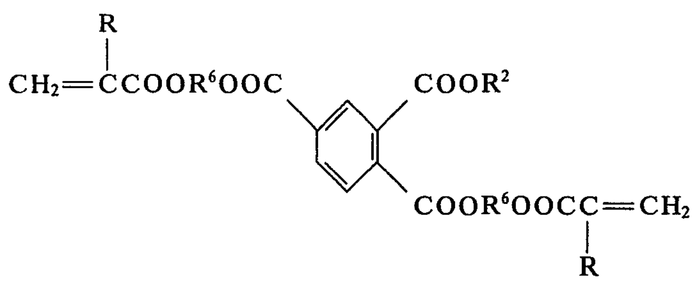

(XVII)

wherein each $R^6$ denotes a group of formula I or II as defined in claim 2.

8. A composition according to claim 3, in which component a) is of the formula

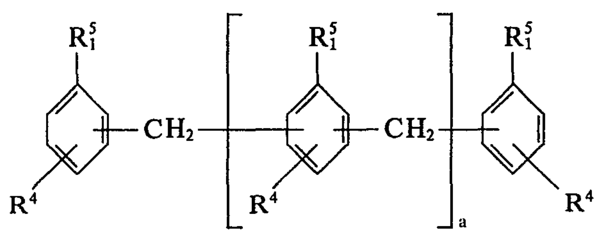

(XVIII)

wherein each $R^5_1$ denotes a group of formula $CH_2{=}C(R)COOR^1-$ or an allyloxy, methallyloxy, or 1-propenyloxy group such that at least two groups $R^5_1$ denote a said group of formula $CH_2{=}C(R)COOR^1-$ and one group $R^5_1$ is an allyloxy, methallyloxy, or 1-propenyloxy group, the $-CH_2-$ groups being ortho or para to a group $R^5_1$, R and a are as defined in claim 2, and $R^1$ and $R^4$ are as defined in claim 6.

9. A composition according to claim 1, in which component a) is of the formula

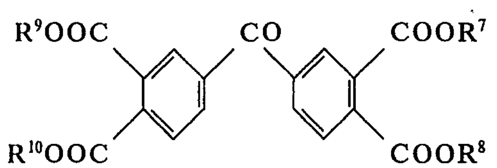

(XIX)

wherein one of $R^7$ and $R^8$ and one of $R^9$ and $R^{10}$ have the same meaning and each denotes an allyl or methallyl group, and each of the remaining symbols of $R^7$ and $R^8$ and of $R^9$ and $R^{10}$ denotes the residue of an alcohol after removal of an alcoholic hydroxyl group, said residue containing an acryloyloxy or methacryloyloxy group.

10. A composition according to claim 9, wherein the acryloyloxy group is present as an acryloylalkenoxy or acryloyloxy-hydroxyalkenoxy group, and the methacryloyloxy group is present as a methacryloylalkenoxy or methacryloyloxy-hydroxyalkenoxy group.

11. A composition according to claim 10, wherein each of the remaining symbols of $R^7$ and $R^8$ and of $R^9$ and $R^{10}$ denotes a group of formula

$$\underset{\displaystyle R}{CH_2{=}\overset{}{C}}COOR^6- \qquad (XX)$$

wherein R is as defined in claim 2 and $R^6$ is as defined in claim 7.

12. A composition according to claim 1, wherein component b) is an ester of a monomercaptan-alkylenecarboxylic acid with a polyhydric alcohol or of an aliphatic monomercaptanmonohydric alcohol with a polycarboxylic acid.

13. A composition according to claim 1, wherein component b) is of the formula

$$R^{17}\left[(O)_d-CO(O)_e-R^{15}(O)_e-CO(O)_d-R^{16}SH\right]_f \qquad (XXV)$$

wherein d and e each denote zero or 1 but are not the same, f is an integer from 1 to 6, $R^{15}$ denotes a divalent organic radical, linked through one or more carbon atoms thereof to the indicated –O- or –CO- units, $R^{16}$ denotes a divalent organic radical, linked through one or more carbon atoms thereof to the indicated –SH group and –O- or –CO- unit, and $R^{17}$ denotes an organic radical, which must contain at least one aliphatic –SH group when f is 1, linked through one or more carbon atoms thereof to the indicated –O- or –CO- unit or units.

14. A composition according to claim 1, wherein component b) is of the formula

$$R^{18}\begin{cases}\left[(O-R^{19})_gOH\right]_j \\ \left[(O-R^{19})_gO(CO)_hR^{20}\right]_k\end{cases} \qquad (XXVI)$$

wherein $R^{18}$ denotes the radical of a polyhydric alcohol after removal of (j + k) alcoholic hydroxyl groups, each $R^{19}$ denotes an alkylene group containing a chain of at least 2 and at most 6 carbon atoms between the indicated consecutive oxygen atoms, $R^{20}$ denotes an aliphatic radical of 1 to 6 carbon atoms, containing at least one mercaptan group, g is a positive integer, h is zero or 1, j is zero or a positive integer such that (j + k) is at most 6, and k is an integer from 2 to 6.

15. A composition according to claim 1, wherein component b) is a mercaptan-terminated sulphide of the general formula

$$HS\left[R^{21}(O)_p\left[\underset{\displaystyle R^{22}}{CHO}\right]_q R^{21}SS\right]_n R^{21}(O)_p\left[\underset{\displaystyle R^{22}}{CHO}\right]_q R^{21}SH \qquad (XXIX)$$

wherein each $R^{21}$ denotes an alkylene hydrocarbon group containing 2 to 4 carbon atoms, $R^{22}$ denotes a hydrogen atom or a methyl or ethyl group, n is an integer which has an average value of at least 1, and either p is zero, in which case q and r are each also zero, or p is 1, in which case q is zero and r is 1.

16. A composition according to claim 1, wherein component b) is a mercaptan-terminated poly(butadiene) of the formula

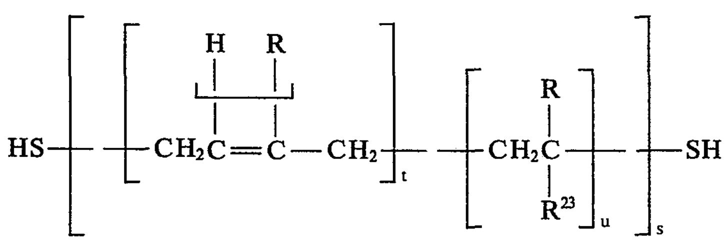

(XXX)

wherein each R is as defined in claim 2, $R^{23}$ denotes –CN, –COOH, $-CONH_2$, $-C_6H_5$, or $-COOR^{24}$, wherein $R^{24}$ denotes an alkyl group of one to eight carbon atoms, t is an integer of at least one, u is zero or a positive integer, and s is an integer of more than one.

17. A composition according to claim 1, wherein component b) is a mercaptan-terminated oxyalkylene compound of the general formula

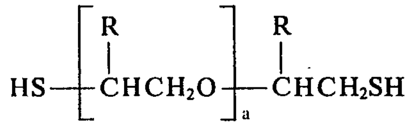 (XXXII)

wherein each R and a have as defined in claim 2.

18. A composition according to claim 1, wherein component b) is of the general formula

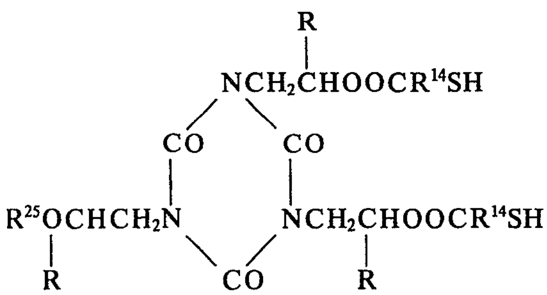 (XXXIII)

wherein each R is as defined in claim 2, each $R^{14}$ denotes $-CH_2-$, $-(CH_2)_2-$, or $-CH(CH_3)-$, and $R^{25}$ denotes a $-OCR^{14}SH$ group or a hydrogen atom.

19. A process for the polymerisation of a composition as claimed in claim 1 with comprises exposing said composition, in the presence of a photoinitiator if required, to actinic radiation.

20. A process according to claim 19 which comprises exposing the composition to the effect of a heat-activated free-radical catalyst.

21. A process according to claim 19 for the polymerisation of a composition which contains, if required, a photoinitiator, and which also contains a heat-activated free-radical catalyst, which process comprises partially polymerising said composition by exposure to actinic radiation and then heating to activate the heat-activated free-radical catalyst.

**Revendications**

1. Compositions polymérisables caractérisées en ce qu'elles contiennent:

a) un composé dont la molécule comporte à la fois:
   i) au moins un radical pris dans l'ensemble constitué par les radicaux acryloyloxy et méthacryloyloxy,
   ii) au moins un radical pris dans l'ensemble constitué par les radicaux allyles, méthallyles et propène-1 yles, relié à chaque fois directement à un atome de carbone d'un noyau aromatique ou à un atome d'oxygène ou à un radical oxycarbonyle (—OOC—) reliés eux-mêmes directement à un tel atome de carbone, la somme de ces radicaux i) et ii) étant au moins égale à 3, et

b) un composé qui contient, par molécule, au moins deux radicaux mercapto directement liés à des atomes de carbone aliphatiques, dans un rapport tel qu'il y ait au moins 0,8 radical mercapto de ce genre pour un radical pris dans l'ensemble constitué par les radicaux allyles, méthallyles et propène-1 yles dans a), mais moins de 1,0 radical mercapto de ce genre pour un radical pris dans l'ensemble constitué par les radicaux acryloyles, méthacryloyles, allyles, méthallyles et propène-1 yles dans a).

2. Compositions selon la revendication 1 caractérisées en ce que le ou chacun des radicaux acryloyloxy ou méthacryloyloxy est lié à un atome de carbone d'un noyau aromatique directement ou par l'atome d'oxygène éther (terminal) d'un radical répondant à la formule I:

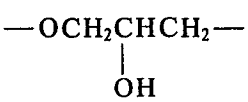 (I)

ou à la formule II:

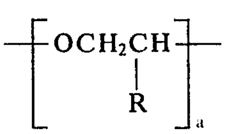 (II)

dans laquelle R représente un atome d'hydrogène ou un radical méthyle et a un nombre entier de 1 à 6.

3. Compositions selon la revendication 1 caractérisées en ce que la composante a) contient, dans sa molécule, au moins 2 et au plus 6 radicaux pris dans l'ensemble constitué par des radicaux acryloyloxy et méthacryloyloxy.

4. Compositions selon la revendication 1 caractérisées en ce que la composante a) contient, dans sa molécule, au moins 2 et au plus 15 radicaux pris dans l'ensemble constitué par les radicaux allyles, méthallyles et propène-1 yles.

5. Compositions selon la revendication 4 caractérisées en ce que la composante a) est un polyphénol dans lequel au moins 2 radicaux hydroxy phénoliques sont estérifiés par des radicaux pris dans l'ensemble constitué par les radicaux acryloyles et méthacryloyles, soit directement soit par l'intermédiaire de l'atome d'oxygène éther (terminal) d'un radical de formule I ou II tel que défini à la revendication 2, et dans lequel ou bien au moins 2 radicaux hydroxy phénoliques sont éthérifiés directement par les radicaux pris dans l'ensemble constitué par les radicaux allyles, méthallyles et propène-1 yles, ou bien il y a, comme substituants directement liés à des atomes de carbone de son ou de ses noyaux benzéniques ou naphtaléniques, au moins 2 radicaux pris dans l'ensemble constitué par les radicaux allyles, méthallyles et propène-1 yles.

6. Compositions selon la revendication 1 caractérisées en ce que la composante a) est choisie dans l'ensemble constitué par les composés répondant aux formules suivantes:

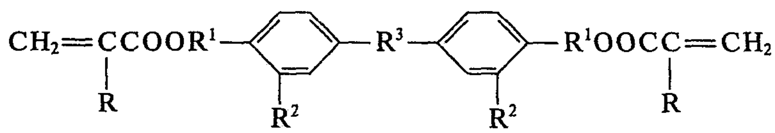

(III)

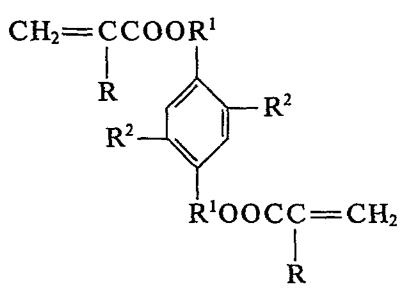

(IV)

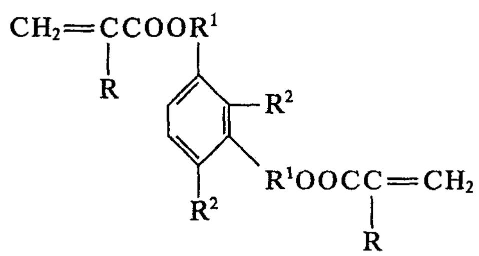

(V)

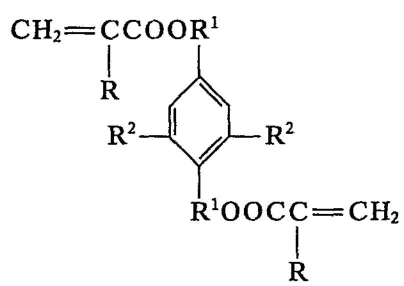

(VI)

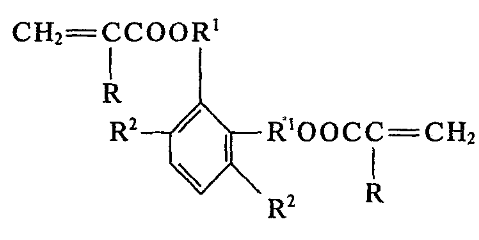

(VII)

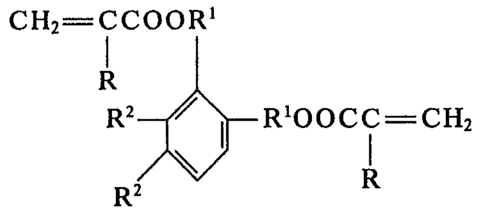

(VIII)

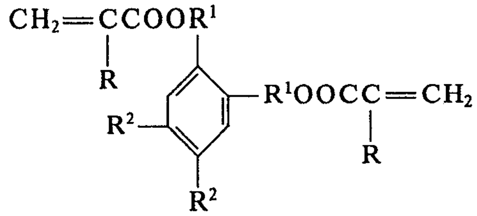

(IX)

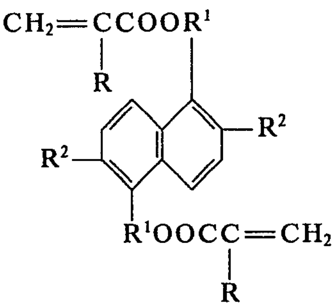

(X)

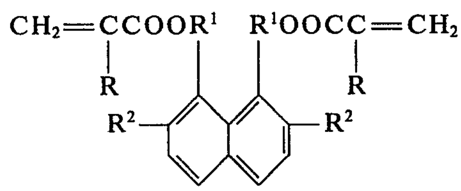

(XI)

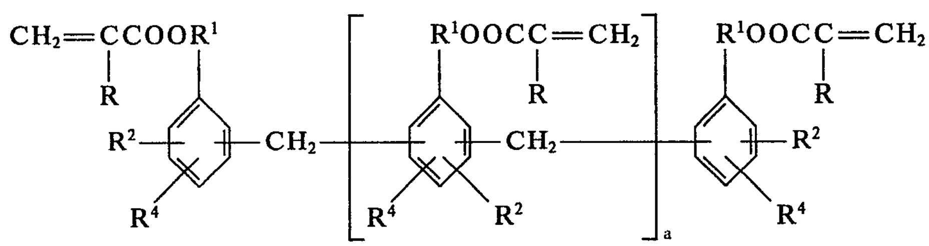

(XII)

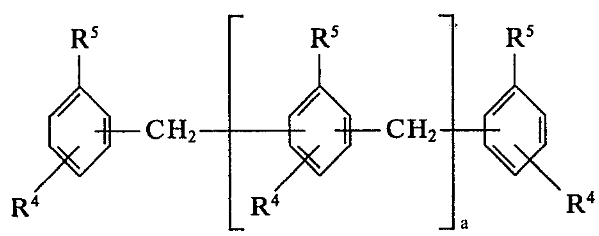

(XIII)

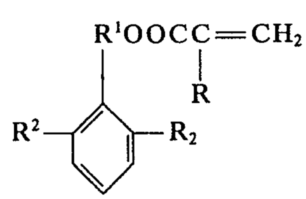

(XIV)

et

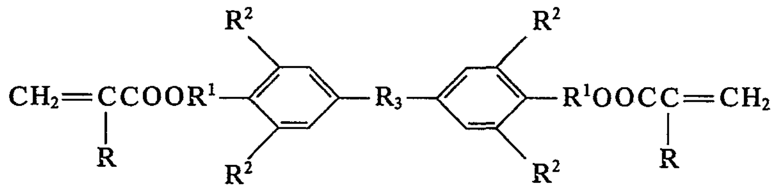

(XV)

dans lesquelles R et a ont les significations données à la revendication 2, les $R^1$ représentent chacun un liaison oxygène-carbone ou un radical de formule I ou II tel que défini à la revendication 2, les $R^2$ représentent chacun un radical allyle, méthallyle ou propène-1 yle, $R^3$ représente une liaison carbone-carbone, un radical alkylène ou alkylidène contenant au maximum 5 atomes de carbone, un atome d'oxygène de fonction éther, un atome de soufre ou un radical $-CO-$, $-SS-$, $-SO-$ ou $-SO_2-$, les $R^4$ représentent chacun un atome d'hydrogène, de chlore ou de brome ou un radical alkyle contenant de 1 à 4 atomes de carbone, et les $R^5$ représentent chacun un radical $CH_2{=}C(R)COOR^1-$, allyloxy, méthallyloxy ou propène-1 yloxy, au moins un $R^5$ étant un tel radical $CH_2{=}C(R)COOR^1-$ et au moins deux $R^5$ représentant chacun un radical allyloxy, méthallyloxy ou propène-1 yloxy, avec la condition que chacun des radicaux $-CH_2-$ et $R^2$ représentés sur les formules XII et XIII se trouve en position ortho ou en position para relativement à un radical $CH_2{=}C(R)COOR^1-$ ou $R^5$ représenté.

7. Compositions selon la revendication 3 caractérisées en ce que la composante a) répond à la formule XVI:

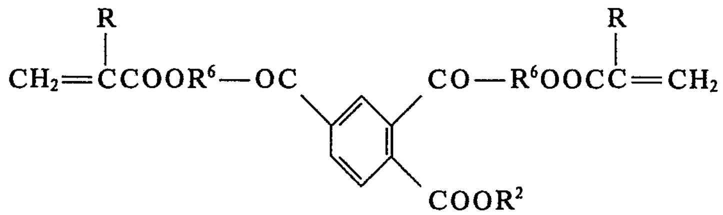

(XVI)

ou à la formule XVII:

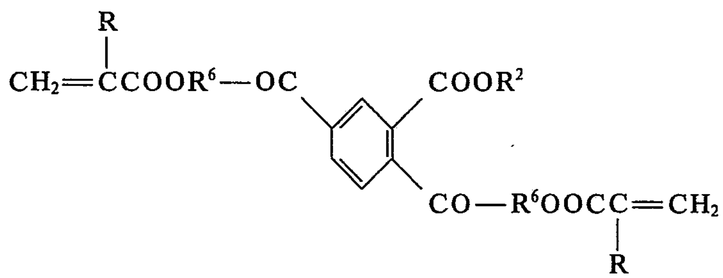

(XVII)

dans lesquelles les $R^6$ représentent chacun un radical de formule I ou II tel que défini à la revendication 2.

8. Compositions selon la revendication 3 caractérisées en ce que la composante a) répond à la formule XVIII:

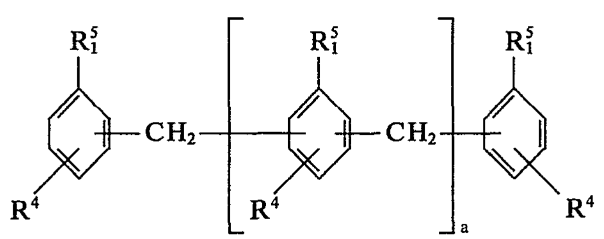

(XVIII)

dans laquelle les $R_1^5$ représentent chacun un radical $CH_2{=}C(R)COOR^1-$, allyloxy, méthallyloxy ou propène-1 yloxy, au moins deux $R_1^5$ représentant un tel radical $CH_2{=}C(R)COOR^1-$ et un $R_1^5$ représentant un radical allyloxy, méthallyloxy ou propène-1 yloxy, et les radicaux $-CH_2-$ se trouvant en position ortho ou en position para relativement à un radical $R_1^5$, les symboles R et a ont les significations données à la revendication 2 tandis que $R^1$ et $R^4$ ont les significations données à la revendication 6.

9. Compositions selon la revendication 1 caractérisées en ce que la composante a) répond à la formule XIX:

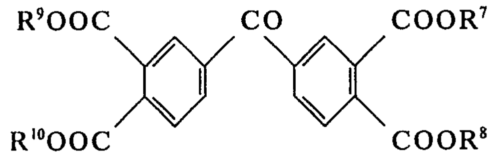

(XIX)

dans laquelle un des symboles $R^7$ et $R^8$ et un des symboles $R^9$ et $R^{10}$ sont identiques l'un à l'autre et représentent chacun un radical allyle ou méthallyle, tandis que les symboles restants, parmi ces symboles $R^7$, $R^8$, $R^9$ et $R^{10}$, représentent chacun le radical qu'on obtient lorsque, d'un alcool, on enlève un groupe hydroxy alcoolique, ce radical contenant un radical acryloyloxy ou méthacryloyloxy.

10. Compositions selon la revendication 9 caractérisées en ce que le radical acryloyloxy est sous la forme d'un radical acryloyl-alkylène-oxy ou acryloyloxy-(hydroxy-alkylène)-oxy, et le radical méthacryloyloxy est sous la forme d'un radical méthacryloyl-alkylène-oxy ou d'un radical méthacryloyloxy-(hydroxy-alkylène)-oxy.

11. Compositions selon la revendication 10 caractérisées en ce que ceux des symboles $R^7$ et $R^8$, et $R^9$ et $R^{10}$, qui restent représentent chacun un radical répondant à la formule XX:

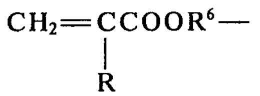

(XX)

dans laquelle R al la signification donnée à la revendication 2 et $R^6$ a la signification donnée à la revendication 7.

12. Compositions selon la revendication 1 caractérisées en ce qu'elles contiennent, comme composante b), un ester dérivant d'un acide monomercapto-alkylène-carboxylique et d'un polyol, ou d'un monomercapto-monoalcool aliphatique et d'un acide polycarboxylique.

13. Compositions selon la revendication 1 caractérisées en ce que la composante b) répond à la formule XXV:

$$R^{17}-\left[(O)_d-CO(O)_e-R^{15}(O)_e-CO(O)_d-R^{16}SH\right]_f \qquad (XXV)$$

dans laquelle d et e sont égaux chacun à 0 ou à 1 mais sont différents l'un de l'autre, f représente un nombre entier de 1 à 6, $R^{15}$ représente un radical organique bivalent qui est lié par un ou plusieurs de ses atomes de carbone aux motifs —O— et —CO— représentés, $R^{16}$ représente un radical organique bivalent qui est lié par un ou plusieurs de ses atomes de carbone aux motifs —SH et —O— ou —CO— représentés, et $R^{17}$ représente un radical organique qui doit contenir, lorsque f est égal à 1, au moins un radical —SH aliphatique et qui est lié, par un ou plusieurs de ses atomes de carbone, aux motifs —O— ou —CO— représentés.

14. Compositions selon la revendication 1 caractérisées en ce que la composante b) répond à la formule XXVI:

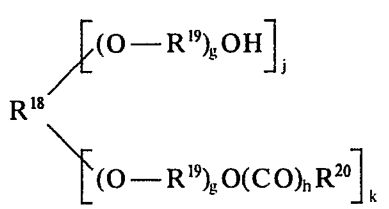

(XXVI)

dans laquelle $R^{18}$ représente le radical que laisse un polyol lorsqu'on l'ampute de (j + k) radicaux hydroxy alcooliques, les $R^{19}$ représentent chacun un radical alkylène ayant une chaîne à au moins 2 et à au plus 6 atomes de carbone entre les atomes d'oxygène successifs représentés, $R^{20}$ représente un radical aliphatique en $C_1$—$C_6$ qui contient au moins un radical mercapto, g représente un nombre entier positif, h est égal à 0 ou à 1, j représente un nombre entier positif ou nul tel que la somme (j + k) soit au plus égale à 6, et k représente un nombre entier de 2 à 6.

15. Compositions selon la revendication 1 caractérisées en ce qu'elles contiennent, comme composante b), un sulfure à radicaux mercapto terminaux qui répond à la formule générale XXIX:

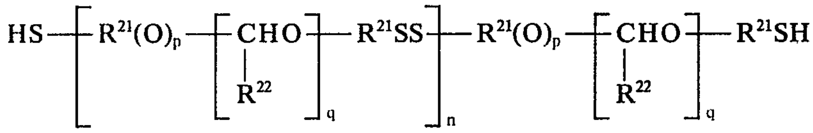

(XXIX)

dans laquelle les $R^{21}$ représentent chacun un radical alkylène contenant de 2 à 4 atomes de carbone, $R^{22}$ représente un atome d'hydrogène ou un radical méthyle ou éthyle, n désigne un nombre entier dont la valeur moyenne est au moins égale à 1, et p est soit égal à 0, auquel cas q et r sont également nuls tous les deux, soit égal à 1, auquel cas q est égal à 0 ou à 1 et r est égal à 1.

16. Compositions selon la revendication 1 caractérisées en ce qu'elles contiennent, comme composante b), un polybutadiène à radicaux mercapto terminaux qui répond à la formule XXX:

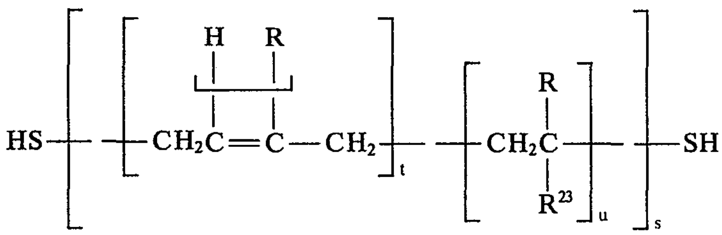

(XXX)

dans laquelle les R ont chacun la signification donnée à la revendication 2, $R^{23}$ représente $-CN$, $-COOH$, $-CONH_2$, $-C_6H_5$ ou $-COOR^{24}$, le symbole $R^{24}$ désignant un alkyle contenant de 1 à 8 atomes de carbone, t représente un nombre entier au moins égal à 1, u représente un nombre entier positif ou nul et s représente un nombre entier supérieur à 1.

17. Compositions selon la revendication 1 caractérisées en ce qu'elles contiennent, comme composante b), un composé oxy-alkylénique à radicaux mercapto terminaux qui répond à la formule générale XXXII:

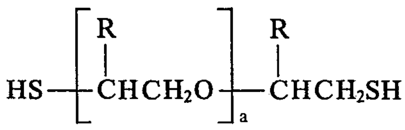

(XXXII)

dans laquelle les R et a ont les significations qui leur ont été données à la revendication 2.

18. Compositions selon la revendication 1 caractérisées en ce que la composante b) répond à la formule générale XXXIII:

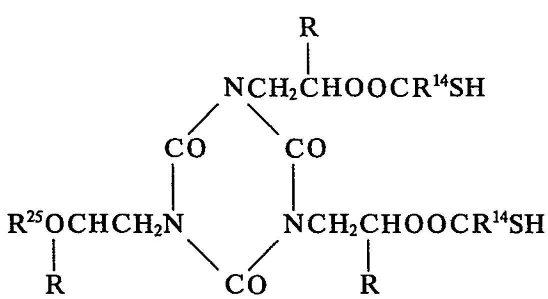

(XXXIII)

dans laquelle les R ont la signification donnée à la revendication 2, les $R^{14}$ représentent chacun un radical $-CH_2-$, $-(CH_2)_2-$ ou $-CH(CH_3)-$, et $R^{25}$ représente un radical $-OCR^{14}SH$ ou un atome d'hydrogène.

19. Procédé pour polymériser des compositions selon la revendication 1, procédé caractérisé en ce qu'on les expose à un rayonnement actinique, au besoin en présence d'un photo-amorceur.

20. Procédé selon la revendication 19 caractérisé en ce que la composition est exposée à l'action d'un catalyseur radicalaire activable par la chaleur.

21. Procédé selon la revendication 19 pour la polymérisation d'une composition contenant, si cela est nécessaire, un photo-amorceur et également un catalyseur radicalaire activable par la chaleur, procédé caractérisé en ce qu'on la polymérise partiellement par exposition à un rayonnement actinique, puis, pour activer le catalyseur radicalaire thermo-activable, on la chauffe.